(19)

Europäisches
Patentamt
European
Patent Office
Office européen
des brevets

(11) **EP 4 560 374 A1**

(12) **EUROPEAN PATENT APPLICATION**
published in accordance with Art. 153(4) EPC

(43) Date of publication:
**28.05.2025  Bulletin 2025/22**

(21) Application number: 23890529.3

(22) Date of filing: 28.10.2023

(51) International Patent Classification (IPC):
***G02B 13/00*** *(2006.01)*

(52) Cooperative Patent Classification (CPC):
**G02B 13/00; G02B 13/18; G03B 17/17**

(86) International application number:
**PCT/CN2023/127424**

(87) International publication number:
**WO 2024/104093 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022  CN 202211448566**

(71) Applicant: **Huawei Technologies Co., Ltd.
Shenzhen, Guangdong 518129 (CN)**

(72) Inventors:
• **NIU, Yajun
  Shenzhen, Guangdong 518129 (CN)**
• **TANG, Wei
  Shenzhen, Guangdong 518129 (CN)**
• **WANG, Heng
  Shenzhen, Guangdong 518129 (CN)**
• **LI, Dengfeng
  Shenzhen, Guangdong 518129 (CN)**
• **ZUO, Qi
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **OPTICAL LENS, CAMERA MODULE AND ELECTRONIC DEVICE**

(57)    Embodiments of this application provide an optical camera lens, a camera assembly, and an electronic device. The optical camera lens includes a lens group and a light folding element. The lens group includes at least one lens with a positive focal power. The light folding element includes an incident surface and an emergent surface. The incident surface and the emergent surface are located on a same side of the light folding element. The incident surface is disposed facing the lens group. After passing through the lens group, light enters the light folding element through the incident surface. The light is reflected a plurality of times in the light folding element, and is emitted from the light folding element through the emergent surface. The optical camera lens satisfies the following relational expressions: 5 mm<T<25 mm; and 5 mm≤EPD≤15 mm, where T is a vertical distance from the center of an imaging surface to an optical axis of the lens group, and EPD is an entrance pupil diameter of the optical camera lens. The optical camera lens in this application has features of telephoto, a wide aperture, a large target surface, and miniaturization, and has good imaging quality.

FIG. 2A

EP 4 560 374 A1

## Description

This application claims priority to Chinese Patent Application No. 202211448566.1, filed with the China National Intellectual Property Administration on November 18, 2022 and entitled "OPTICAL CAMERA LENS, CAMERA ASSEMBLY, AND ELECTRONIC DEVICE", which is incorporated herein by reference in its entirety.

## TECHNICAL FIELD

This application relates to the field of photographing devices, and specifically, to an optical camera lens, a camera assembly, and an electronic device.

## BACKGROUND

Portable devices such as a mobile phone and a tablet are provided with optical camera lenses for taking pictures, recording videos, or the like. A telephoto lens can greatly improve telephoto photography experience of a user, and becomes an indispensable part of an electronic device.

As telephoto photography of electronic devices becomes increasingly common, consumers have increasingly high requirements on the telephoto photography, for example, a clearer image, better night photographing experience, and a smaller size. In the conventional technology, problems such as poor imaging quality, a narrow aperture, and a large assembly size of a telephoto optical camera lens exist.

Therefore, it is necessary to provide an optical camera lens, to meet design requirements of miniaturization, a wide aperture, and high imaging quality.

## SUMMARY

Embodiments of this application disclose an optical camera lens, a camera assembly, and an electronic device. The optical camera lens has features such as telephoto, a wide aperture, a large target surface, and miniaturization, and has good imaging quality.

According to a first aspect, an embodiment of this application provides an optical camera lens, including a lens group and a light folding element, where light passes through the lens group and the light folding element in sequence. The lens group includes at least one lens with a positive focal power. The light folding element includes an incident surface and an emergent surface. The incident surface and the emergent surface are located on a same side of the light folding element. The incident surface is disposed facing the lens group. After passing through the lens group, light enters the light folding element through the incident surface. The light is reflected a plurality of times in the light folding element, and is emitted from the light folding element through the emergent surface. The optical camera lens satisfies the following relational expressions: $5\,mm<T<25\,mm$; and $5\,mm\leq EPD\leq 15\,mm$, where T is a vertical distance from a center of an imaging surface to an optical axis of the lens group, T may also be understood as a size from the optical axis of the lens group to a center of a photosensitive element of a camera assembly in a direction perpendicular to the optical axis of the lens group, and EPD is an entrance pupil diameter of the optical camera lens. The lens group may include one, two, or more lenses. The light folding element may be a prism, a reflector, or another type of light folding element. The incident surface and the emergent surface may be coplanar or may not be coplanar. The light passes through the lens group and the light folding element in sequence for imaging on the photosensitive element of the camera assembly, and the incident surface and the emergent surface are located on a same side of the light folding element. Therefore, the lens group and the photosensitive element are located on a same side of the light folding element.

In this application, the at least one lens with a positive focal power can converge light. This helps implement telephoto photographing, reduce a size of the optical camera lens, implement miniaturization, and implement a design of a wide aperture. The light is reflected a plurality of times in the light folding element, so that an optical path length of the optical camera lens can be increased, to implement designs of telephoto, a wide aperture, a large target surface, and miniaturization. The light enters the light folding element through the incident surface, and is emitted from the light folding element through the emergent surface, and the light is reflected a plurality of times in the light folding element, so that the lens group and the photosensitive element are located on the same side (the side on which the incident surface and the emergent surface are located) of the light folding element. This helps shorten a size of the optical camera lens in an optical axis direction of the lens group, to implement the design of the miniaturization. In this embodiment of this application, a range of the EPD is limited. This facilitates the design of the wide aperture. A size of the optical camera lens in a direction perpendicular to the optical axis of the lens group is controlled through a limitation of $5\,mm<T<25\,mm$, to avoid an excessively large size of the optical camera lens in the direction perpendicular to the optical axis of the lens group and excessive occupation of space in an electronic device. When T is less than or equal to 5 mm, space between the lens group and the imaging surface of the optical camera lens is excessively small, and structural interference is generated between the lens group and the photosensitive element of the camera assembly. When T is greater than or equal to 25 mm, the size of the optical camera lens 21 in the direction perpendicular to the optical axis of the lens group is excessively large. This is not conducive to reducing the size of the optical camera lens 21 in the direction perpendicular to the optical axis of the lens group.

In some implementations, the optical camera lens satisfies the following relational expression: 0.7<TTL/EFL<5, where TTL is a total track length of the optical camera lens, and EFL is an effective focal length of the optical camera lens. In this application, the light folding element reflects and folds, a plurality of times, light entering the optical camera lens, so that a ratio of the total track length of the optical camera lens to the effective focal length of the optical camera lens can meet 0.7<TTL/EFL<2. Therefore, the optical camera lens has a long focal length to implement good long-range photographing effect, and a design of miniaturization of the optical camera lens can be implemented.

In some implementations, the optical camera lens satisfies the following relational expression: 0.15<H1/(H1+H2) <0.95, where H1 is a vertical distance from a vertex of a 1st lens located on an object-side surface in the lens group to the incident surface of the light folding element, and H2 is a vertical distance from the incident surface of the light folding element to a bottom surface. The sizes of the lens group and the light folding element in a direction of the optical axis of the lens group are appropriately configured, so that the optical camera lens can be miniaturized, has good light capture performance, and maintains high-quality imaging of the optical camera lens.

In some implementations, the optical camera lens satisfies the following relational expression: 6 mm<H1+H2<15 mm, where H1 is a vertical distance from a vertex of a 1st lens located on an object-side surface in the lens group to the incident surface of the light folding element, and H2 is a vertical distance from the incident surface of the light folding element to a bottom surface. In this implementation of this application, a total system height (namely, a sum of H1 and H2) is small, and a miniaturization requirement of the optical camera lens can be met.

In some implementations, the optical camera lens satisfies the following relational expression: 3.5 mm<H1<6.5 mm, where H1 is a vertical distance from a vertex of a 1st lens located on an object-side surface in the lens group to the incident surface of the light folding element. A size of the optical camera lens can be effectively reduced by limiting a range of H1, to facilitate miniaturization of the optical camera lens and avoid an increase in the size of the optical camera lens group due to an excessively large range of H1.

In some implementations, the optical camera lens satisfies the following relational expression: 2.5 mm<H2<5 mm, where H2 is a vertical distance from the incident surface of the light folding element to a bottom surface. A range of H2 is limited, so that miniaturization of the optical camera lens is ensured while it is ensured that light has a sufficient optical path length and a design of telephoto of the optical camera lens is implemented.

In some implementations, the optical camera lens satisfies the following relational expression: 3 mm<H3<12 mm, where H3 is a distance between the imaging surface of the optical camera lens and a surface that is of the light folding element and that is farthest away from the lens group. Sizes of the imaging surface of the optical camera lens and the light folding element in a first direction (the first direction is the direction of the optical axis of the lens group) are small by using a limitation of 3 mm<H3<12 mm, and space occupied by the photosensitive element and the light folding element in the first direction is reduced.

In some implementations, an equivalent focal length of the optical camera lens is greater than or equal to 65 mm and less than or equal to 300 mm, so that the optical camera lens has a telephoto characteristic.

In some implementations, the optical camera lens satisfies the following relational expression: 1.4<Fno<10, where Fno is an F-number of the optical camera lens. Small Fno indicates a wide aperture. A small F-number of the optical camera lens is set, so that a wide aperture is obtained while a telephoto characteristic of the optical camera lens is implemented, and a passing amount of light of the optical camera lens is increased. This helps improve imaging quality of the optical camera lens.

In some implementations, the light is reflected N times in the light folding element, where N is an odd number greater than or equal to 3. The light is reflected at least three times, namely, an odd number of times, in the light folding element, so that the lens group and the photosensitive element can be located on the same side of the light folding element. This can increase an optical path length of the optical camera lens, implement designs of telephoto, a wide aperture, and miniaturization, achieve good photographing effect, and reduce space occupied by the optical camera lens in the electronic device.

In some implementations, the light folding element includes a trapezoidal columnar prism, and the light folding element includes a first reflective surface, a second reflective surface, and a third reflective surface. The second reflective surface and the incident surface are located on a same side of the light folding element, an included angle between the first reflective surface and the incident surface is an acute angle, an included angle between the third reflective surface and the emergent surface is an acute angle, and reflection of the light at the plurality of reflective surfaces of the light folding element includes: reflection, at the first reflective surface, of at least a part of the light passing through the incident surface; reflection, at the second reflective surface, of at least a part of the light reflected by the first reflective surface; and reflection, at the third reflective surface, of at least a part of the light reflected by the second reflective surface, so that at least the part of light passes through the emergent surface and is emitted from the light folding element. In an implementation of this application, the light may be reflected three times in the light folding element, and the light is separately reflected by the first reflective surface, the second reflective surface, and the third reflective surface and is emitted from the light folding element through the emergent surface. This increases an optical path length of the light, which facilitates the optical camera lens of designs of telephoto, a wide aperture, and miniaturization.

In some implementations, any two of the incident surface, the second reflective surface, or the emergent surface are located on a same plane. The incident surface, the second reflective surface, or the emergent surface is located on a same side of the light folding element. Any two surfaces of the incident surface, the second reflective surface, or the emergent surface may be coplanar, or the incident surface, the second reflective surface, and the emergent surface are coplanar. A coplanar design can reduce difficulty in manufacturing the light folding element.

In some implementations, the light folding element includes a trapezoidal columnar prism, and the light folding element includes a first reflective surface, a second reflective surface, a third reflective surface, a fourth reflective surface, and a fifth reflective surface. The second reflective surface, the fourth reflective surface, and the incident surface are located on a same side of the light folding element, an included angle between the first reflective surface and the incident surface is an acute angle, an included angle between the fifth reflective surface and the emergent surface is an acute angle, and reflection of the light at a plurality of reflection points of the light folding element includes: reflection, at the first reflective surface, of at least a part of the light passing through the incident surface; reflection, at the second reflective surface, of at least a part of the light reflected by the first reflective surface; reflection, at the third reflective surface, of at least a part of the light reflected by the second reflective surface; reflection, at the fourth reflective surface, of at least a part of the light reflected by the third reflective surface; and reflection, at the fifth reflective surface, of at least a part of the light reflected by the fourth reflective surface, so that at least the part of light passes through the emergent surface and is emitted from the light folding element. In an implementation of this application, the light may be reflected five times in the light folding element, the light is separately reflected by the first reflective surface, the second reflective surface, the third reflective surface, the fourth reflective surface, and the fifth reflective surface, and is emitted from the light folding element through the emergent surface. This increases an optical path length of the light, and facilitates the optical camera lens of designs of telephoto, a wide aperture, and miniaturization.

In some implementations, any two of the incident surface, the second reflective surface, the fourth reflective surface, or the emergent surface are located on a same plane. The incident surface, the second reflective surface, the fourth reflective surface, or the emergent surface is located on a same side of the light folding element, and any two surfaces of the incident surface, the second reflective surface, the fourth reflective surface, or the emergent surface may be located on a same plane, or any three surfaces may be coplanar, or the incident surface, the second reflective surface, the fourth reflective surface, and the emergent surface are coplanar. A coplanar design can reduce difficulty in manufacturing the light folding element.

In some implementations, the optical camera lens satisfies the following relational expression: $10°<\alpha<45°$, where $\alpha$ is the included angle between the first reflective surface and the incident surface. The included angle between the first reflective surface and the incident surface of the light folding element is limited, so that an optical path direction of light emitted into the light folding element can be controlled, and the light is reflected and folded a plurality of times. This helps increase an optical path length, and implement designs of telephoto, a wide aperture, and miniaturization. In addition, stray light in the optical camera lens can be reduced, and imaging quality of the optical camera lens can be improved.

In some implementations, the optical camera lens satisfies the following relational expression: $10°<\beta<45°$, where $\beta$ is an included angle between the emergent surface and a last reflective surface that is of the light folding element and through which light passes. The included angle between the emergent surface and the last reflective surface that is of the light folding element and through which the light passes is limited, so that an optical path direction of light emitted into the light folding element can be controlled, and the light is reflected and folded a plurality of times. This helps increase an optical path length, and implement designs of telephoto, a wide aperture, and miniaturization. In addition, stray light in the optical camera lens can be reduced, and imaging quality of the optical camera lens can be improved.

In some implementations, the optical camera lens satisfies the following relational expression: $\alpha=\beta$. The light folding element may be an isosceles trapezoidal prism, and the first reflective surface and the last reflective surface that is of the light folding element and through which the light passes are two legs of the isosceles trapezoidal prism.

In some implementations, at least one reflective surface of the light folding element includes a reflective coating, so that light can be reflected at a corresponding position of the reflective surface of the light folding element. When the reflective coating is not disposed on the reflective surface of the light folding element, light reflection effect is poor, and light utilization is low.

In some implementations, the light folding element includes a groove, and the groove is coated with a light shielding material. This helps reduce stray light and improve imaging quality of the optical camera lens.

In some implementations, the lens group moves for focusing in a direction of the optical axis of the lens group, or the light folding element moves for focusing in a direction of the optical axis of the lens group, to improve imaging quality.

In some implementations, the lens group moves in a direction perpendicular to the optical axis of the lens group to implement image stabilization. This helps improve imaging quality.

In some implementations, all lenses in the lens group may be made of plastic materials or glass materials, or some lenses are made of plastic materials, and some lenses are made of glass materials.

In some implementations, an object-side surface or an image-side surface of a lens in the lens group may be a spherical surface or an aspherical surface.

According to a second aspect, this application further provides a camera assembly, including a photosensitive element and the optical camera lens according to any foregoing implementation. The photosensitive element is located on an image side of the optical camera lens. The camera assembly has features of telephoto, a wide aperture, and miniaturization.

In some implementations, the photosensitive element moves for focusing in a direction of an optical axis of the lens group, or the photosensitive element moves in a direction perpendicular to an optical axis of the lens group to implement image stabilization.

According to a third aspect, this application provides an electronic device, where the electronic device includes an image processor and the foregoing camera assembly, the image processor is communicatively connected to the camera assembly, and the image processor is configured to obtain image data from the camera assembly and process the image data.

## BRIEF DESCRIPTION OF DRAWINGS

The following describes accompanying drawings used in embodiments of this application.

FIG. 1 is a diagram of a structure of an electronic device according to an embodiment of this application;
FIG. 2A is a diagram of a structure of a camera assembly according to a first embodiment of this application;
FIG. 2B is a diagram of a structure of a camera assembly according to a first embodiment of this application;
FIG. 3 is a diagram for representing optical performance of an optical camera lens according to a first embodiment of this application;
FIG. 4A is a diagram of a structure of a camera assembly according to a second embodiment of this application;
FIG. 4B is a diagram of a structure of a camera assembly according to a second embodiment of this application;
FIG. 5 is a diagram for representing optical performance of an optical camera lens according to a second embodiment of this application;
FIG. 6A is a diagram of a structure of a camera assembly according to a third embodiment of this application;
FIG. 6B is a diagram of a structure of a camera assembly according to a third embodiment of this application;
FIG. 7 is a diagram for representing optical performance of an optical camera lens according to a third embodiment of this application;
FIG. 8A is a diagram of a structure of a camera assembly according to a fourth embodiment of this application;
FIG. 8B is a diagram of a structure of a camera assembly according to a fourth embodiment of this application;
FIG. 9 is a diagram for representing optical performance of an optical camera lens according to a fourth embodiment of this application;
FIG. 10A is a diagram of a structure of a camera assembly according to a fifth embodiment of this application;
FIG. 10B is a diagram of a structure of a camera assembly according to a fifth embodiment of this application;
FIG. 11 is a diagram for representing optical performance of an optical camera lens according to a fifth embodiment of this application;
FIG. 12A is a diagram of a structure of a camera assembly according to a sixth embodiment of this application;
FIG. 12B is a diagram of a structure of a camera assembly according to a sixth embodiment of this application; and
FIG. 13 is a diagram for representing optical performance of an optical camera lens according to a sixth embodiment of this application.

## DESCRIPTION OF EMBODIMENTS

For ease of understanding, English abbreviations and related technical terms used in embodiments of this application are first explained and described below.

A focal power (focal power) is equal to a difference between convergence of an image beam and convergence of an object beam, and indicates a capability of an optical system to refract light.

A positive focal power indicates that a lens or a lens group has a positive focal length and has effect of converging light.

A negative focal power indicates that a lens or a lens group has a negative focal length and has effect of diverging light.

A total track length (total track length, TTL) is a total length from an object-side surface of a lens element closest to an object side of an optical camera lens to an imaging surface, and is a main factor forming a height of a camera.

Object side: Using a lens element as a boundary, one side on which a to-be-imaged scene is located is the object side.

Image side: Using the lens element as the boundary, one side on which an image of the to-be-imaged scene is located is the image side.

Object-side surface: A surface that is of a lens and that is close to the object side is referred to as the object-side surface.

Image-side surface: A surface that is of the lens and that is close to the image side is referred to as the image-side surface.

An imaging surface is located on an image side of all lenses in an optical camera lens, and is a carrier surface of an image formed after light passes through the lenses in the optical camera lens in sequence.

An optical axis is a light ray that passes vertically through a center of an ideal lens element. An optical axis of an optical camera lens is an axis that passes through a center of each lens of the optical camera lens. When light rays parallel to the optical axis pass through a convex lens element, in an ideal convex lens element, all the light rays converge at one point behind the lens element. The point at which all the light rays converge is a focus. When light is propagated along the optical axis, a transmission direction of the light does not change.

An F-number, also referred to as an F-stop (Fno), is a relative value (a reciprocal of a relative aperture) obtained by dividing a focal length of a camera lens by an entrance pupil diameter of the camera lens. When the F-number is smaller, a luminous flux in a same unit time is larger. A larger F-number indicates a smaller depth of field, and background content of a photo is blurred.

An Abbe number (Abbe), in other words, a dispersion coefficient, is a difference ratio of refractive indices of an optical material at different wavelengths, and indicates a degree of dispersion of the material.

An axial chromatic aberration is also referred to as a longitudinal chromatic aberration or a positional chromatic aberration or an axial chromatic aberration. A beam of light parallel to an optical axis converges at different positions after passing through a camera lens. This aberration is referred to as a positional chromatic aberration or an axial chromatic aberration. This is because positions of images formed by the camera lens for light of different wavelengths are different, so that image focal planes of light of different colors cannot overlap during final imaging, and polychromatic light is scattered to form dispersion.

A distortion is a degree at which an image formed by an optical system for an object is distorted relative to the object. A distortion is caused because a height of a point at which chief rays with different fields of view intersect a Gaussian image plane after the chief rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

Astigmatism (astigmatism): Because an object point is not on an optical axis of an optical system, a beam emitted by the object point has an oblique angle to the optical axis. After the beam is refracted by a lens, convergence points of a narrow meridian beam and a narrow sagittal beam are not a same point. That is, the beam cannot be focused at one point, and imaging is not clear, resulting in astigmatism. The narrow meridian beam and the narrow sagittal beam are names of beams in two vertical planes in a rotationally symmetrical optical system.

A meridian plane (meridian plane) is a flat surface formed by chief rays (a chief beam) of an object point outside an optical axis and the optical axis.

A sagittal plane (sagittal surface) is a flat surface that passes through the chief array (chief beam) of the object point outside the optical axis and that is perpendicular to the meridian plane.

The following describes technical solutions of embodiments in this application with reference to the accompanying drawings. The solutions described in this application are merely some but not all embodiments of this application. All other embodiments obtained by persons skilled in the art based on embodiments of this application without creative efforts shall fall within the protection scope of this application. In the description of embodiments of this application, terms such as "first" and "second" are merely intended for description, and shall not be understood as an indication or implication of relative importance or implicit indication of a quantity of indicated technical features. Therefore, a feature limited by "first" or "second" may explicitly or implicitly include one or more features.

Embodiments of this application provide an optical camera lens, a camera assembly in which the optical camera lens is used, and an electronic device including the camera assembly. The optical camera lens includes a lens group and a light folding element. Light passes through the lens group and the light folding element in sequence. The lens group includes at least one lens with a positive focal power. The light folding element includes an incident surface and an emergent surface. The incident surface and the emergent surface are located on a same side of the light folding element. The incident surface is disposed facing the lens group. After passing through the lens group, light enters the light folding element through the incident surface. The light is reflected a plurality of times in the light folding element, and is emitted from the light folding element through the emergent surface. The optical camera lens satisfies the following relational expressions: 5 mm<T<25 mm; and 5 mm≤EPD≤15 mm, where T is a vertical distance from the center of an imaging surface to an optical axis of the lens group, and EPD is an entrance pupil diameter of the optical camera lens. The optical camera lens in embodiments of this application has features of telephoto, a wide aperture, a large target surface, and miniaturization.

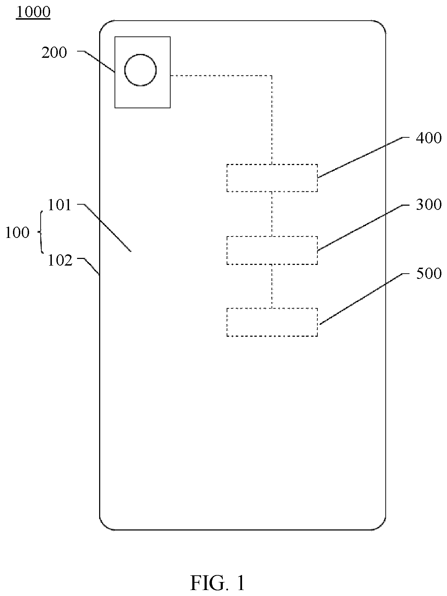

FIG. 1 is a diagram of a structure of an electronic device 1000. The electronic device 1000 may be a mobile phone, a tablet computer, a laptop computer, a wearable device, a camera, or another form of device that has a photographing or video shooting function. In this embodiment of this application, an example in which the electronic device 1000 is a mobile phone is used for description.

The electronic device 1000 includes a housing 100, a display (not shown in FIG. 1), a camera assembly 200, and an image processor 300. The housing 100 includes a rear cover 101 and a side frame 102. The rear cover 101 and the side frame 102 may be of an integrally formed structure, or may be assembled to form an integrated structure. The display and the rear cover 101 are respectively mounted on two sides of the side frame 102, which jointly encloses an inner cavity of the entire device, to mount the camera assembly 200, the image processor 300, or another mechanical part.

The camera assembly 200 may be disposed on the rear cover 101 and used as a rear-facing camera of the electronic device 1000. A hole may be provided on the rear cover 101, and the camera assembly 200 collects light through the hole of the rear cover 101 to implement image or video shooting. For example, the rear cover 101 may include a light transmission lens element, and the light transmission lens element is mounted in the hole of the rear cover 101, to allow the light to pass through, and can be dustproof and waterproof In some other embodiments, the camera assembly 200 may be disposed on a side on which the display is located, and is used as a front-facing camera of the electronic device 1000. Both the front-facing camera and the rear-facing camera may be used to take selfies, and may also be used by a photographer to photograph another object.

It may be understood that a mounting position of the camera assembly 200 of the electronic device 1000 in the embodiment shown in FIG. 1 is merely an example, and the mounting position of the camera assembly 200 is not strictly limited in this application. In some other embodiments, the camera assembly 200 may alternatively be mounted at another position of the electronic device 1000. For example, the camera assembly 200 may be mounted in the middle or the upper right corner of an upper part of the back of the electronic device 1000. In some other embodiments, the electronic device 1000 may include a terminal body and an auxiliary component that can rotate, move, or disassemble relative to the terminal body, and the camera assembly 200 may alternatively be disposed on the auxiliary component.

The display is fastened to the housing 100, and the display is configured to display an image, to meet a use requirement of a user. The display may include a display layer and a touch layer covering the display layer. The touch layer may be used by the user to perform a touch operation. The touch layer may be a light transmission glass cover, plastic, or another material with good light transmittance. The display layer may be a liquid crystal display, an organic light-emitting diode display, or the like. The display layer may include a display region and a non-display region. The non-display region is located on a side of the display region, or is disposed around a periphery of the display region. In some electronic devices, the non-display region may not be disposed

The image processor 300 is communicatively connected to the camera assembly 200. The camera assembly 200 is configured to obtain image data and input the image data into the image processor 300. The image processor 300 is configured to process the image data obtained from the camera assembly 200. The communication connection between the camera assembly 200 and the image processor 300 may be for data transmission implemented through an electrical connection like cabling, or data transmission implemented through coupling. It may be understood that the camera assembly 200 may alternatively be communicatively connected to the image processor 300 in another manner in which data transmission can be implemented.

The image processor 300 may include a plurality of processing modules, and may run to convert an original image signal captured by the camera assembly 200, to form image information. Processed information is transmitted to a display assembly of the display, and an image or a picture is displayed on the display. The image processor 300 may be an image processing chip or a digital signal processing chip, and is configured to: adjust a color of the image, perform noise reduction on the image, and the like, to further improve image quality.

In some embodiments, the electronic device 1000 may include an analog-to-digital converter 400. The analog-to-digital converter 400 is connected between the camera assembly 200 and the image processor 300. The analog-to-digital converter 400 is configured to: convert, into a digital image signal, a signal generated by the camera assembly 200 and transmit the digital image signal to the image processor 300.

**In** some embodiments, the electronic device 1000 may include a memory 500. The memory 500 is communicatively connected to the image processor 300. After processing the digital image signal, the image processor 300 transmits an image to the memory 500, so that when the image needs to be viewed subsequently, the image can be searched for in the memory 500 at any time and displayed on the display.

In some embodiments, the image processor 300 further compresses processed digital image signal, and then stores a compressed digital image signal in the memory 500, to save space of the memory 500.

It may be understood that there may be one or at least two camera assemblies 200. When there is one camera assembly 200, the camera assembly 200 may be used for the front-facing camera, or may be used for the rear-facing camera. When there are at least two camera assemblies 200, the at least two camera assemblies 200 may be cameras that can meet different photographing requirements, such as a telephoto camera assembly and a wide-angle camera assembly. This is not limited in this application.

In this embodiment of this application, a working principle of the camera assembly 200 in the electronic device 1000 may be as follows: Light reflected by a photographed scene is emitted into the camera assembly 200, to generate an optical image and the optical image is projected onto a surface of a photosensitive element 22. The photosensitive element 22 converts the optical image into an electrical signal, namely, an analog image signal, and transmits the analog image signal obtained through conversion to the analog-to-digital converter 400, so that the analog-to-digital converter 400 converts the analog image signal into a digital image signal and sends the digital image signal to the image processor 300. The image processor 300 may run to convert the original image signal captured by the camera assembly 200, to form the image information. The processed information is transmitted to the display assembly of the display, and the image or the picture is displayed on the display. Alternatively, the image processor 300 may process the digital image signal, and then transmit the image to the memory 500, so that when the image needs to be viewed subsequently, the image can be searched from the memory 500 at any time and displayed on the display.

FIG. 1 is merely the diagram of the structure of the electronic device 1000. Sizes, quantities, positions, and the like of the camera assemblies 200, the image processors 300, the analog-to-digital converters 400, and the memories 500 shown in FIG. 1 are merely examples for description, and may be adjusted based on a requirement. This is not limited in this application.

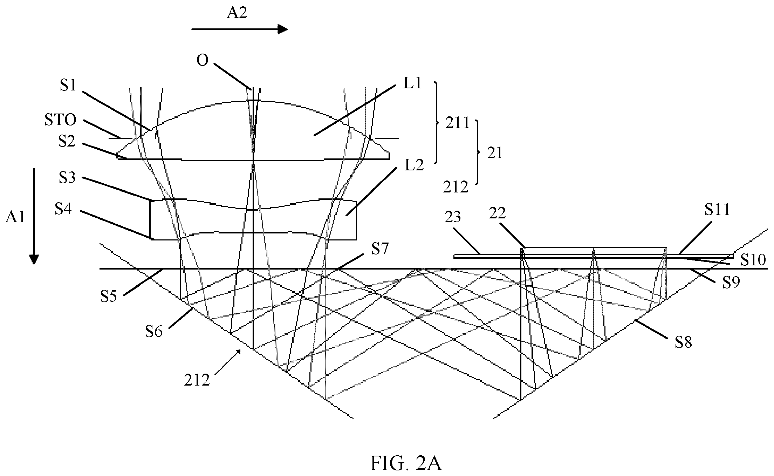

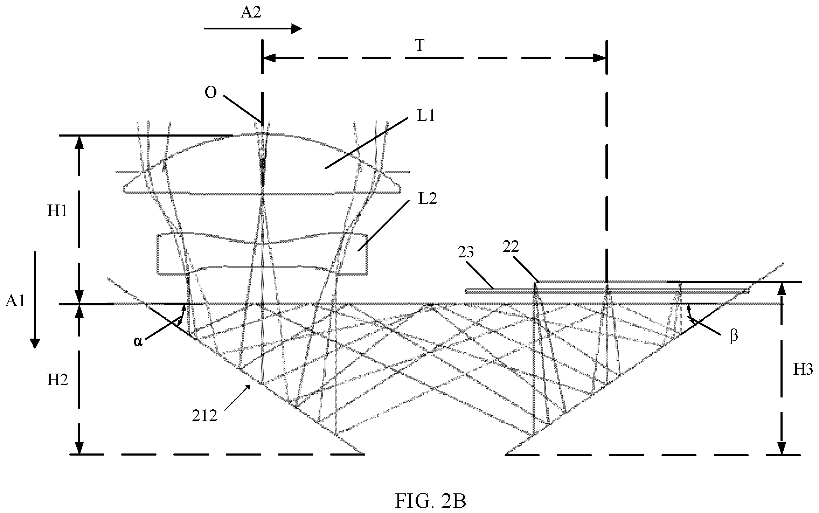

FIG. 2A and FIG. 2B each are a diagram of a structure of the camera assembly 200 according to a first embodiment of this application, and are merely for ease of identifying the structure. The camera assembly 200 may include an optical camera lens 21, a photosensitive element 22, and a light filter 23. After being refracted by the optical camera lens 21, light reflected by a photographed object is incident on the photosensitive element 22 for imaging.

The photosensitive element 22 may be located on an image side of the optical camera lens 21. The photosensitive element 22 is a semiconductor chip, and a surface of the photosensitive element 22 includes hundreds of thousands to millions of photoelectric diodes. When the photosensitive element 22 is irradiated by light, charges are generated. The photosensitive element 22 converts, by using an optical-to-electrical conversion function of a photoelectric device, an optical image on a photosensitive surface of the photosensitive element 22 into an electrical signal in a corresponding proportion to the optical image. The photosensitive surface of the photosensitive element 22 is disposed facing the optical camera lens 21. The photosensitive element 22 may be a charge coupled device, a complementary metal oxide semiconductor, a photoelectric transistor, a thin film transistor, or the like.

The camera assembly 200 may further include a driving piece (not shown in the figure), and the driving piece may include a fastened part and a movable part. The fastened part and the movable part are movably linked, and the movable part and the fastened part may move relative to each other. The driving piece may be a motor. For example, the driving piece may be a voice coil motor.

In some embodiments, the driving piece may drive the optical camera lens 21 to implement a focusing or zooming function, and a distance between the optical camera lens 21 and the photosensitive element 22 is changed, to accurately perform imaging on the photosensitive element 22. In another embodiment, focusing may also be implemented by moving a prism.

The light filter 23 may be located between the optical camera lens 21 and the photosensitive element 22. Light passing through the optical camera lens 21 is incident on the light filter 23 for imaging on the photosensitive element 22 through a light filtering function of the light filter 23. For example, the light filter 23 may be an infrared light filter. The light filter 23 may eliminate unnecessary light of a band projected onto the photosensitive element 22, to prevent the photosensitive element 22 from generating a false color or a ripple, so as to improve effective resolution and color reproduction of the photosensitive element 22.

In some embodiments, a light filter mechanical part may alternatively be removed, but surface processing or material processing is performed on at least one optical element of the optical camera lens 21, to implement light filtering. A specific embodiment of a mechanical part or structure used for implementing light filtering is not strictly limited in this application.

Refer to FIG. 2A. A first embodiment shown in FIG. 2A is used as an example for detailed description. The optical camera lens 21 includes a lens group 211 and a light folding element 212. The light passes through the lens group 211 and the light folding element 212 in sequence, and reaches the photosensitive element 22 of the camera assembly 200, to form an image on the photosensitive element 22. The lens group 211 may include one or more lenses disposed along an optical axis O. The lens group 211 may include at least one lens with a positive focal power. The light folding element 212 may include an incident surface S5 and an emergent surface S9. The incident surface S5 and the emergent surface S9 are located on a same side of the light folding element 212, and the incident surface S5 and the emergent surface S9 may be coplanar or may not be coplanar. The incident surface S5 is disposed facing the lens group 211. The light emitted by the lens group 211 passes through the incident surface S5 and enters the light folding element 212. The light is reflected a plurality of times in the light folding element 212, and is emitted from the light folding element 212 through the emergent surface S9. It may be understood that the light passes through the lens group 211 and the light folding element 212 in sequence for imaging on the photosensitive element 22 of the camera assembly 200, and the incident surface S5 and the emergent surface S9 are located on the same side of the light folding element. Therefore, the lens group 211 and the photosensitive element 22 are located on a same side of the light folding element 212. It may be understood that a propagation direction of light from a side of the lens group 211 to a side of the photosensitive element 22 changes by 180°.

In some embodiments, the light may be reflected N times in the light folding element 212, where N is an odd number greater than or equal to 3. The light is reflected at least three times, namely, an odd number of times, in the light folding element 212, so that the lens group 211 and the photosensitive element 22 can be located on the same side of the light folding element 212. This can increase an optical path length of the optical camera lens 21, implement designs of telephoto, a wide aperture, a large target surface, and miniaturization, achieve good photographing effect, and reduce space occupied by the optical camera lens 21 in the electronic device 1000. If the light is reflected less than three times in the light folding element 212, the optical path length is short, and it is difficult to implement telephoto and miniaturization.

In some embodiments, the light folding element 212 may be a prism, a reflector, or another type of light folding element. This is not limited in this application.

In some implementations, the optical camera lens 21 satisfies the following relational expression: 5 mm<T<25 mm, where T is a vertical distance from the center of an imaging surface to the optical axis O of the lens group 211. The photosensitive element is located on the imaging surface, and T may also be understood as a vertical distance from the center of the photosensitive element to the optical axis O of the lens group 211. For example, a value of T may be 10 mm, 15 mm, or 20 mm. A size of the optical camera lens 21 in a direction perpendicular to the optical axis O of the lens group 211 is controlled through a limitation of 5 mm<T<25 mm, to avoid an excessively large size of the optical camera lens 21 in the direction perpendicular to the optical axis O of the lens group 211 and excessive occupation of space in the electronic device 1000. When T is less than or equal to 5 mm, space between the lens group 211 and the imaging surface of the optical camera lens 21 is excessively small, and structural interference is generated between the lens group and the photosensitive element of the camera assembly. When T is greater than or equal to 25 mm, the size of the optical camera lens 21 in the direction perpendicular to the optical axis O of the lens group 211 is excessively large. This is not conducive to reducing the size of the optical camera lens 21 in the direction perpendicular to the optical axis O of the lens group 211.

In some implementations, 5 mm≤EPD≤15 mm, and EPD is an entrance pupil diameter of the optical camera lens. In this embodiment of this application, a range of EPD is limited, to facilitate the design of the wide aperture.

The optical camera lens 21 in embodiments of this application has features of telephoto, the wide aperture, the large target surface, and miniaturization. In this application, the at least one lens with the positive focal power can converge the light. This helps implement telephoto photographing, and can reduce the size of the optical camera lens, implement miniaturization, also help implement the design of the wide aperture, increase a luminous flux, and improve imaging quality of the optical camera lens 21. The light is reflected a plurality of times in the light folding element 212, so that the optical path length of the optical camera lens 21 can be increased, to implement the designs of telephoto, the wide aperture, the large target surface, and miniaturization. The light enters the light folding element 212 through the incident surface, and is emitted from the light folding element 212 through the emergent surface, the light is reflected a plurality of times in the light folding element 212, and the lens group 211 and the photosensitive element 22 are located on the same side (the side on which the incident surface and the emergent surface are located) of the light folding element 212. This helps shorten a size of the optical camera lens 21 in a first direction A1 (a direction of the optical axis O of the lens group 211 is the first direction A1, and a second direction A2 is perpendicular to the first direction A1), to implement the design of miniaturization. It is conducive to miniaturization and the wide aperture of the optical camera lens through limitations of 5 mm<T<25 mm and 5 mm≤EPD≤15 mm.

Refer to FIG. 2A. The light folding element 212 may be a trapezoidal columnar prism. The light folding element 212 may further include a first reflective surface S6, a second reflective surface S7, and a third reflective surface S8. The incident surface S5, the second reflective surface S7, and the emergent surface S9 may be located on a same side of the light folding element 212, and any two or all three of the incident surface S5, the second reflective surface S7, and the emergent surface S9 may be coplanar, that is, located on a same plane. A coplanar design can reduce difficulty in manufacturing the light folding element 212. In another implementation, the incident surface S5, the second reflective surface S7, and the emergent surface S9 may not be coplanar.

In some embodiments, any two adjacent surfaces of the incident surface S5, the second reflective surface S7, and the emergent surface S8 may at least partially overlap. For example, when the incident surface S5 and the second reflective surface S7 that are adjacent may be coplanar, and the incident surface S5 and the second reflective surface S7 partially overlap, the light can be transmitted into the light folding element 212 from an overlapping region of the incident surface S5 and the second reflective surface S7, and the light can also be reflected in the overlapping region of the incident surface S5 and the second reflective surface S7. In another implementation, two adjacent surfaces of the incident surface S5, the second reflective surface S7, and the emergent surface S8 may not overlap.

In some embodiments, an included angle between the first reflective surface S6 and the incident surface S5 is an acute angle, and an included angle between the third reflective surface S8 (a last reflective surface that is of the light folding element 212 and through which the light passes) and the emergent surface S9 is an acute angle. Reflection of the light at the plurality of reflective surfaces of the light folding element 212 includes: reflection, at the first reflective surface S6, of at least a part of the light passing through the incident surface S5, where the light is reflected for the first time; reflection, at the second reflective surface S7, of at least a part of the light reflected by the first reflective surface S6, where the light is reflected for the second time; and reflection, at the third reflective surface S8, of at least a part of the light reflected by the second reflective surface S7, where the light is reflected for the third time, so that at least the part of light passes through the emergent surface S9 and is emitted from the light folding element 212 to the photosensitive element 22. In this embodiment of this application, the light may be reflected three times in the light folding element 212, and the light is separately reflected by the first reflective surface S6, the second reflective surface S7, and the third reflective surface S8 in sequence and is emitted from the light folding element 212 through the emergent surface S9. This increases the optical path length of the light, and facilitates the designs of telephoto, the wide aperture, and miniaturization of the optical camera lens 21.

In some embodiments, the light folding element 212 may include a surface (not shown in FIG. 2A) parallel to the second reflective surface, and the light folding element 212 may be a quadrilateral. For example, the light folding element 212 may be a trapezoidal columnar prism.

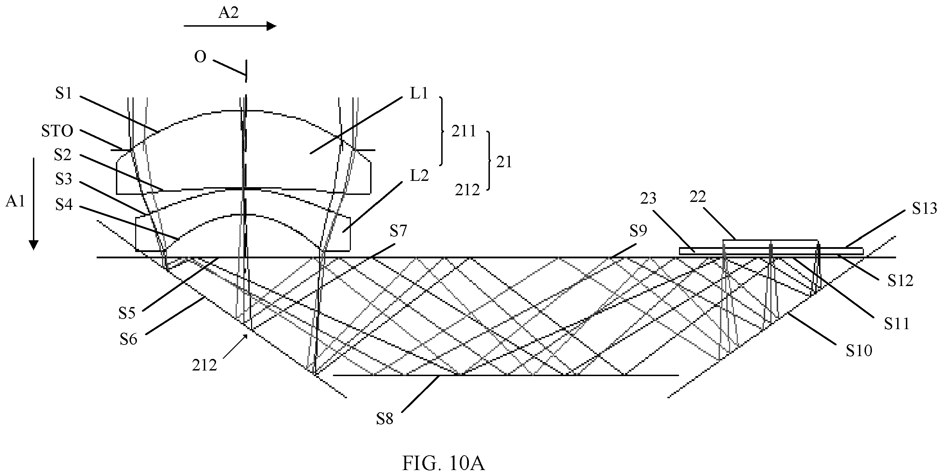

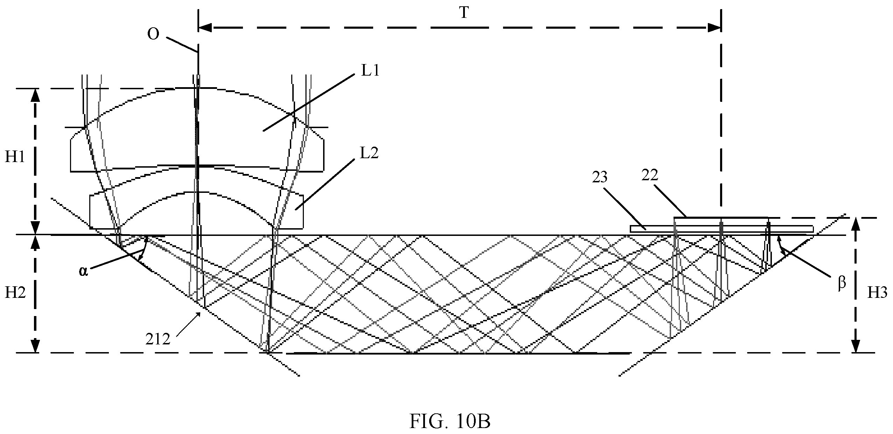

FIG. 10A and FIG. 10B each are a diagram of a structure of the camera assembly 200 according to a fifth embodiment of this application, and are merely for ease of identifying the structure. The light folding element 212 further includes the first reflective surface S6, the second reflective surface S7, the third reflective surface S8, a fourth reflective surface S9, and a fifth reflective surface S10. The incident surface S5, the second reflective surface S7, the fourth reflective surface S9, and an emergent surface S11 may be located on a same side of the light folding element 212. Any two of the incident surface S5, the second reflective surface S7, the fourth reflective surface S9, and the emergent surface S11 may be located on a same plane. For example, any two surfaces, any three surfaces, or four surfaces of the incident surface S5, the second reflective surface S7, the fourth reflective surface S9, and the emergent surface S11 may be coplanar. In other words, two or more of the incident surface S5, the second reflective surface S7, the fourth reflective surface S9, and the emergent surface S11 may be coplanar. A coplanar design can reduce difficulty in manufacturing the light folding element 212. In another implementation, the incident surface S5, the second reflective surface S7, the fourth reflective surface S9, and the emergent surface S11 may not be coplanar.

In some embodiments, any two adjacent surfaces of the incident surface S5, the second reflective surface S7, the fourth reflective surface S9, and the emergent surface S11 may at least partially overlap. For example, when the incident surface S5 and the second reflective surface S7 may be coplanar, and the incident surface S5 and the second reflective surface S7 partially overlap, the light can be transmitted into the light folding element 212 from an overlapping region of the incident surface S5 and the second reflective surface S7, and the light can also be reflected in the overlapping region of the incident surface S5 and the second reflective surface S7. In another implementation, two adjacent surfaces of the incident surface S5, the second reflective surface S7, the fourth reflective surface S9, and the emergent surface S11 may not overlap.

In some embodiments, an included angle between the first reflective surface S6 and the incident surface S5 is an acute angle, and an included angle between the fifth reflective surface S10 (a last reflective surface that is of the light folding element 212 and through which the light passes) and the emergent surface S11 is an acute angle. Reflection of the light at the plurality of reflective surfaces of the light folding element 212 includes: reflection, at the first reflective surface S6, of at least a part of the light passing through the incident surface S5, where the light is reflected for the first time; reflection, at the second reflective surface S7, of at least a part of the light reflected by the first reflective surface S6, where the light is reflected for the second time; reflection, at the third reflective surface S8, of at least a part of the light reflected by the second reflective surface S7, where the light is reflected for the third time; reflection, at the fourth reflective surface S9, of at least a part of the light reflected by the third reflective surface S8, where the light is reflected for the fourth time; and reflection, at the fifth reflective surface S10, of at least a part of the light reflected by the fourth reflective surface S9, where the light is reflected for the fifth time, so that at least the part of light passes through the emergent surface S11 and is emitted from the light folding element 212 to the photosensitive element 22. In this embodiment of this application, the light may be reflected five times in the light folding element 212, the light is separately reflected by the first reflective surface S6, the second reflective surface S7, the third reflective surface S8, the fourth reflective surface S9, and the fifth reflective surface S10, and is emitted from the light folding element 212 through the emergent surface S11. This increases the optical path length of the light, and facilitates designs of telephoto, the wide aperture, and miniaturization the optical camera lens 21.

In some embodiments, as shown in FIG. 10A, the light folding element 212 includes a trapezoidal columnar prism, and the incident surface S5, the second reflective surface S7, the fourth reflective surface S9, and the emergent surface S11 are all parallel to the third reflective surface S8.

In another embodiment, the light folding element 212 may alternatively be a pentagonal prism or a hexagonal prism. This is not limited in this application.

In some implementations, the optical camera lens 21 satisfies the following relational expression: $10° < \alpha < 45°$, where $\alpha$ is an included angle between the first reflective surface and the incident surface. For example, a value of $\alpha$ may be 20°, 30°, 35°, or 40°. The included angle between the first reflective surface and the incident surface of the light folding element is limited, so that an optical path direction of light emitted into the light folding element 212 can be controlled, and the light is reflected and folded a plurality of times. This helps increase an optical path length, and implement designs of telephoto, a wide aperture, a large target surface, and miniaturization. In addition, stray light in the optical camera lens 21 can be reduced, and imaging quality of the optical camera lens 21 can be improved.

In some implementations, the optical camera lens 21 satisfies the following relational expression: $10° < \beta < 45°$, where $\beta$ is an included angle between the emergent surface and a last reflective surface that is of the light folding element and through which light passes. For example, a value of $\beta$ may be 20°, 30°, 35°, or 40°. The included angle between the emergent surface and the last reflective surface that is of the light folding element and through which the light passes is limited, so that an optical path direction of light emitted into the light folding element 212 can be controlled, and the light is reflected and folded a plurality of times. This helps increase an optical path length, and implement designs of telephoto, a wide aperture, and miniaturization. In addition, stray light in the optical camera lens 21 can be reduced, and imaging quality of the optical camera lens 21 can be improved.

In some embodiments, the optical camera lens 21 satisfies the following relational expression: $\alpha = \beta$. The light folding element may be an isosceles trapezoidal prism, and the first reflective surface and the last reflective surface that is of the light folding element and through which the light passes are two legs of the isosceles trapezoidal prism.

In some embodiments, at least one reflective surface of the light folding element includes a reflective coating, so that light can be reflected at a corresponding position of the reflective surface of the light folding element. When the reflective coating is not disposed on the reflective surface of the light folding element, light reflection effect is poor, and light utilization is low.

In some embodiments, the light folding element 212 may include a groove (not shown in FIG. 10A), the groove may be located on the third reflective surface S8, and the groove is coated with a light shielding material. This helps reduce stray light and improve imaging quality of the optical camera lens 21.

In some implementations, the optical camera lens 21 satisfies the following relational expression: $0.7 < TTL/EFL < 5$, where TTL is a total track length of the optical camera lens 21, and EFL is an effective focal length of the optical camera lens 21. For example, a value of the TTL/EFL may be 1, 1.2, 1.5, 2, 2.5, 3, 3.5, or 4. In this application, the light folding element 212 reflects and folds, a plurality of times, light entering the optical camera lens 21, so that a ratio of the total track length of the optical camera lens 21 to the effective focal length of the optical camera lens 21 can meet a limitation condition. Therefore, the optical camera lens 21 has a long focal length to implement good long-range photographing effect, and a design of miniaturization of the optical camera lens 21 can be implemented.

In some implementations, the optical camera lens 21 satisfies the following relational expression: $0.15 < H1/(H1+H2) < 0.95$, where H1 is a vertical distance from a vertex of a 1st lens located on an object-side surface in the lens group 211 to an incident surface of the light folding element, and H2 is a vertical distance from the incident surface of the light folding element 212 to a bottom surface. For example, a value of $H1/(H1+H2)$ may be 0.3, 0.4, 0.5, 0.6, 0.7, or 0.8. A range of $H1/(H1+H2)$ is appropriately configured, so that the optical camera lens 21 is miniaturized, has good light capture performance, and maintains high-quality imaging of the optical camera lens 21.

In some implementations, the optical camera lens 21 satisfies the following relational expression: 6 mm < H1+H2 < 15 mm, where H1 is a vertical distance from a vertex of a 1st lens located on an object-side surface in the lens group 211 to an incident surface of the light folding element, and H2 is a vertical distance from the incident surface of the light folding element 212 to a bottom surface. For example, a value of H1+H2 may be 7 mm, 8 mm, 9 mm, 10 mm, or 12 mm. In this implementation of this application, a total system height (namely, a sum of H1 and H2) is small, and a miniaturization requirement of the optical camera lens 21 can be met.

In some implementations, the optical camera lens 21 satisfies the following relational expression: 3.5 mm < H1 < 6.5 mm, where H1 is a vertical distance from a vertex of a 1st lens located on an object-side surface in the lens group 211 to an incident surface of the light folding element. For example, a value of H1 may be 4 mm or 5 mm. A size of the optical camera lens 21 can be effectively reduced by limiting a range of H1, to facilitate miniaturization of the optical camera lens 21 and avoid an increase in the size of the optical camera lens 21 due to an excessively large range of H1.

In some implementations, the optical camera lens 21 satisfies the following relational expression: 2.5 mm < H2 < 5 mm, where H2 is a vertical distance from an incident surface of the light folding element 212 to a bottom surface. For example, a value of H2 may be 3 mm, 3.5 mm, or 4 mm. A range of H2 is limited, so that miniaturization of the optical camera lens is ensured while it is ensured that light has a sufficient optical path length and a design of telephoto of the optical camera lens 21 is implemented.

In some implementations, the optical camera lens 21 satisfies the following relational expression: 3 mm < H3 < 12 mm, where H3 is a distance between an imaging surface of the optical camera lens 21 and a surface that is of the light folding element 212 and that is farthest away from the lens group 211. Namely, a distance between the photosensitive element 22 and the surface that is of the light folding element 212 and that is farthest away from the lens group 211. For example, a value of H3 may be 4.5 mm, 5.5 mm, or 6 mm. Sizes of the imaging surface of the optical camera lens 21 and the light folding element 212 in a first direction (the first direction is a direction of the optical axis O of the lens group 211) are small by using a limitation of 3 mm < H3 < 12 mm, and space occupied by the photosensitive element 22 on the imaging surface and the light folding element 212 in the first direction A1 is reduced.

In some implementations, an equivalent focal length of the optical camera lens is greater than or equal to 65 mm and less than or equal to 300 mm, so that the optical camera lens has a telephoto characteristic.

In some implementations, the optical camera lens 21 satisfies the following relational expression: 1.4<Fno<10, where Fno is an F-number of the optical camera lens 21. For example, Fno may be 2, 2.5, 3.5, or 4. Small Fno indicates a wide aperture. A small F-number of the optical camera lens 21 is set, so that a wide aperture is obtained while a telephoto characteristic of the optical camera lens 21 is implemented, and a passing amount of light of the optical camera lens 21 is increased. This helps improve imaging quality of the optical camera lens 21.

In some implementations, a direction of the optical axis O of the lens group 211 is the first direction A1, and the lens group 211 moves for focusing in the first direction A1, or the light folding element 212 moves for focusing in the first direction A1, to improve imaging quality.

In some implementations, a direction of the optical axis O of the lens group 211 is the first direction A1, a second direction A2 is perpendicular to the first direction A1, and the lens group 211 moves in the second direction A2 to implement image stabilization. This helps improve imaging quality.

In some implementations, the photosensitive element moves for focusing in a direction of the optical axis of the lens group, or the photosensitive element moves in a direction perpendicular to the optical axis of the lens group, to implement image stabilization.

In some implementations, a lens in the lens group 211 may be made of a plastic material or a glass material, or some lenses are made of plastic materials, and some lenses are made of glass materials.

In some implementations, an object-side surface or an image-side surface of a lens in the lens group 211 may be a spherical surface or an aspherical surface.

In some implementations, the light folding element 212 includes a prism, the prism includes at least two spliced sub-prisms, and the at least two sub-prisms may be fixedly connected by using an optical adhesive.

In some embodiments, when object-side surfaces and/or image-side surfaces of some lenses in the optical camera lens 21 are aspherical surfaces, the object-side surfaces and/or the image-side surfaces of the some lenses may be limited by using but not limited to the following aspherical surface formula:

$$z = \frac{cr^2}{1 + \sqrt{1 - (1+k)c^2r^2}} + \sum_{i=2}^{N} \alpha_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an $i^{th}$-order aspheric coefficient.

The following describes some specific but non-limiting examples of this application in more detail with reference to FIG. 2A to FIG. 13 by using six embodiments.

First embodiment

As shown in FIG. 2A and FIG. 2B, in this embodiment of this application, the camera assembly 200 includes the optical camera lens 21, the photosensitive element 22, and the light filter 23. Light passes through the optical camera lens 21 and the light filter 23 in sequence, and reaches the photosensitive element 22 for imaging. The optical camera lens 21 includes an aperture STO, the lens group 211, and the light folding element 212 that are disposed in sequence along the optical axis O. The lens group 211 and the photosensitive element 22 are located on a same side of the light folding element 212. The lens group 211 may have a positive focal power. The lens group 211 includes a first lens L1 and a second lens L2. The second lens L2 is located between the first lens L1 and the light folding element 212. The aperture STO may be located on an object-side surface of the first lens L1. In another implementation, the aperture STO may alternatively be located at another position. This is not limited in this application. In this embodiment, a 1st lens located on the object-side surface in the lens group 211 is the first lens L1.

In this embodiment of this application, the first lens L1 may have a positive focal power, and the first lens L1 may include an object-side surface S1 and an image-side surface S2. The second lens L2 may have a negative focal power, and the second lens L2 may include an object-side surface S3 and an image-side surface S4.

In this embodiment of this application, the light folding element 212 includes the incident surface S5, the first reflective surface S6, the second reflective surface S7, the third reflective surface S8, and the emergent surface S9. The incident surface S5, the second reflective surface S7, and the emergent surface S9 may be coplanar, and two adjacent surfaces of the incident surface S5, the second reflective surface S7, and the emergent surface S9 may at least overlap.

For example, when the incident surface S5 and the second reflective surface S7 may be coplanar, and the incident surface S5 and the second reflective surface S7 may overlap, light can be transmitted into the light folding element 212 from an overlapping region of the incident surface S5 and the second reflective surface S7, and the light can also be reflected in the overlapping region of the incident surface S5 and the second reflective surface S7. In another implementation, the incident surface S5, the second reflective surface S7, and the emergent surface S9 may not be coplanar, and two adjacent surfaces of the incident surface S5, the second reflective surface S7, and the emergent surface S9 may not overlap.

Before light emitted by the lens group 211 reaches the photosensitive element 22, the light may be reflected and folded three times in the light folding element 212. Light from the lens group 211 may pass through the incident surface S5 of the light folding element 212 and enter the light folding element 212. At least a part of the light passing through the incident surface S5 is reflected at the first reflective surface S6, where the light is reflected for the first time; at least a part of the light reflected by the first reflective surface S6 is reflected at the second reflective surface S7, where the light is reflected for the second time; and at least a part of the light reflected by the second reflective surface S7 is reflected at the third reflective surface S8, where the light is reflected for the third time, so that at least the part of the light is emitted from the light folding element 212 to the photosensitive element 22 through the emergent surface S9.

In this embodiment of this application, the light folding element 212 may be a prism, for example, may be an isosceles trapezoidal prism. The first reflective surface S6 and the third reflective surface S8 may be two legs of a trapezoid. A surface parallel to the second reflective surface S7 is not shown. In another implementation, the light folding element 212 may be a reflector or another type of light folding element.

It may be understood that the light folding element 212 in this embodiment of this application may be of a quadrilateral three-dimensional structure, a pentagonal three-dimensional structure, or the like, and is of a complete and regular polygonal three-dimensional structure. The light folding element 212 shown in the figure is merely an example.

In addition, the light filter 23 is disposed behind the light folding element 212, and the light filter 23 includes an object-side surface S10 and an image-side surface S11. An imaging surface S12 (not shown in FIG. 2A and FIG. 2B) is a carrier surface on which an image is formed after light passes through the lens group 211 and the light folding element 212 in the optical camera lens 21 in sequence. The photosensitive element 22 is located on the imaging surface S12.

In this embodiment, the first lens L1 may be made of a glass material, and the second lens L2 may be made of a plastic material. In another embodiment, all lenses of the lens group 211 may be made of a glass material or a plastic material, or may be made of both a glass material and a plastic material. This is not limited in this application.

In this embodiment of this application, the lens group 211 may be moved in the first direction A1 to implement focusing, or the light folding element 212 may be moved in the first direction A1 to implement focusing, so as to implement good imaging effect of the optical camera lens 21. The lens group 211 may be moved in the second direction A2 to implement image stabilization, or the photosensitive element 22 may be moved in the second direction A2 to implement image stabilization. This improves imaging effect.

Table 1a shows a curvature radius, a thickness, a refractive index, and an Abbe number of each lens and each light filter in the optical camera lens 21 in a first embodiment. The Abbe number is a dispersion coefficient.

Table 1a

| Surface number | Descriptions | Surface type | Curvature radius | Thickness | Refractive index | Abbe number |
|---|---|---|---|---|---|---|
| OBJ | Object surface | Plane | Infinity | Infinity | | |
| STO | Aperture | Plane | Infinity | -1.080271206 | | |
| S1 | First lens | Aspherical surface | 5.7759 | 1.6733 | 1.81 | 40.99 |
| S2 | | Aspherical surface | -372.3542 | 1.3627 | | |
| S3 | Second lens | Aspherical surface | -3.6054 | 0.6696 | 1.67 | 19.40 |
| S4 | | Aspherical surface | -9.4380 | 0.9944 | | |
| S5 | Light folding element | Spherical surface | Infinity | 2.2500 | 1.74 | 43.40 |
| S6 | | First reflective surface | Infinity | -5.5318 | 1.74 | 43.40 |
| S7 | | Second reflective surface | Infinity | 5.5318 | 1.74 | 43.40 |
| S8 | | Third reflective surface | Infinity | -2.2500 | 1.74 | 43.40 |
| S9 | | Spherical surface | Infinity | -0.3000 | | |
| S10 | Light filter | Spherical surface | Infinity | -0.2100 | 1.52 | 64.20 |
| S11 | | Spherical surface | Infinity | -0.1239 | | |

(continued)

| Surface number | Descriptions | Surface type | Curvature radius | Thickness | Refractive index | Abbe number |
|---|---|---|---|---|---|---|
| S12 | Imaging surface | Plane | | | | |

Table 1b shows an aspheric coefficient of each lens of the optical camera lens 21 in a first embodiment.

Table 1b

| Surface number | K | A4 | A6 | A8 | A10 |
|---|---|---|---|---|---|
| S1 | | -0.0003373 | -1.811E-05 | -1.477E-06 | 1.8855E-07 |
| S2 | | -0.0009984 | 0.00010454 | -1.898E-06 | -1.263E-07 |
| S3 | | 0.02797325 | -0.0023784 | 0.00012307 | 1.4237E-05 |
| S4 | | 0.02467173 | -0.001375 | 1.4916E-05 | 5.2767E-06 |
| Surface number | A12 | A14 | A16 | A18 | A20 |
| S1 | -4.358E-09 | -3.649E-10 | 1.6224E-11 | | |
| S2 | 1.125E-08 | -1.013E-09 | 4.2435E-11 | | |
| S3 | -3.016E-06 | 2.7133E-07 | -2.714E-08 | 2.9449E-09 | -1.347E-10 |
| S4 | 6.2773E-07 | -5.779E-07 | 2.5689E-07 | -5.134E-08 | 3.6024E-09 |

Herein, K is a quadratic surface constant, and symbols such as A4, A6, A8, A10, A12, A14, A16, A18, and A20 indicate aspheric coefficients.

In this embodiment, both the object-side surfaces and the image-side surfaces of the first lens L1 and the second lens L2 are aspherical surfaces, and may be limited by using but not limited to the following aspherical surface formula:

$$z = \frac{cr^2}{1 + \sqrt{1 - (1+k)c^2 r^2}} + \sum_{i=2}^{N} \alpha_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an ith-order aspheric coefficient.

Table 1c shows design parameters in a first embodiment of this application. In Table 1c, a diagonal of a semi-sensor is half of a diagonal size of the photosensitive element 22, and a total system height is a sum of H1 and H2. $\alpha$ is an included angle between the first reflective surface S6 and the incident surface S5 of the light folding element 212, and $\beta$ is an included angle between the third reflective surface S8 and the emergent surface S9 of the light folding element 212.

Table 1c

| | |
|---|---|
| EFL/mm | 15.64 |
| Fno | 2.30 |
| Diagonal of a semi-sensor/mm | 3.60 |
| Total system height/mm | 8.50 |
| H1/mm | 4.70 |
| H2/mm | 3.80 |
| H3/mm | 4.30 |
| T/mm | 10.00 |
| TTL/mm | 20.90 |

(continued)

| | |
|---|---|
| TTL/EFL | 1.34 |
| H1/(H1+H2) | 0.55 |
| $\alpha/°$ | 33 |
| $\beta/°$ | 33 |
| Focus group | Lens group/Light folding element |

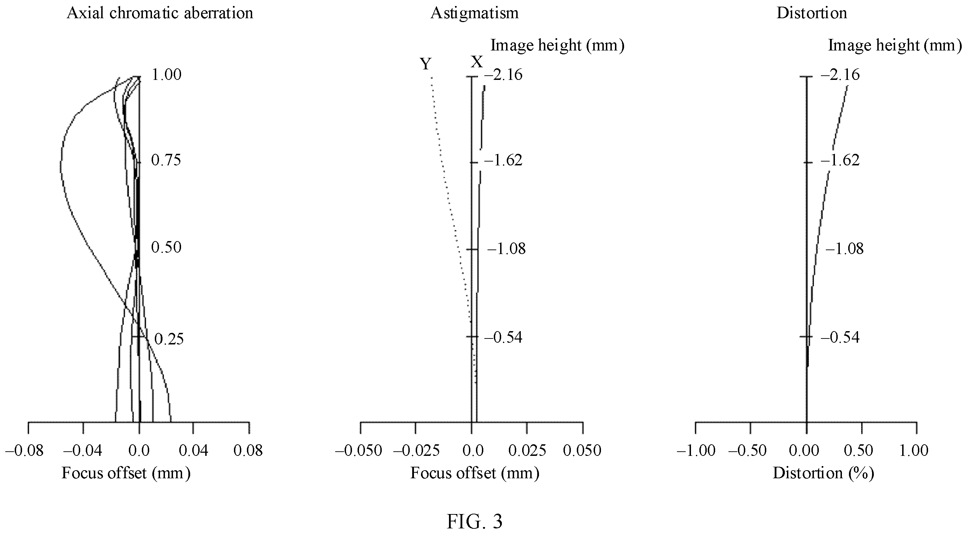

FIG. 3 shows an axial chromatic aberration curve, an astigmatism field curve, and a distortion curve of the optical camera lens according to a first embodiment. The axial chromatic aberration curve represents that a convergence point deviates after light of different wavelengths passes through the lenses of the optical system, and reference wavelengths of the axial chromatic aberration curve are 650.0000 nm, 610.0000 nm, 587.5618 nm, 555.0000 nm, and 470.0000 nm. A physical meaning of the axial chromatic aberration curve is a deviation relative to an ideal image point after light of a corresponding wavelength emitted in a 0-degree field of view passes through the optical camera lens. A horizontal coordinate of the axial chromatic aberration curve is a deviation value in an optical axis direction, and a vertical coordinate of the axial chromatic aberration curve is a normalized coordinate at a pupil. Values in FIG. 3 are all small, and axial aberrations (a spherical aberration, a chromatic aberration, and the like) of the optical camera lens 21 is well corrected. The astigmatism field curve indicates meridional image plane bending and sagittal image plane bending, and indicates a deviation between a convergence point of fine beams in different fields of view and an ideal imaging surface, where a solid line X is a beam in a sagittal direction, and a dashed line Y is a beam in a meridional direction. A horizontal coordinate of the astigmatism field curve is a deviation value in the optical axis direction, and a vertical coordinate of the astigmatism field curve is a corresponding field of view. A reference wavelength of the astigmatism field curve may be 587.5618 nm. When a specific value of a field of view is excessively large, image quality of the field of view is poor or an advanced aberration exists. As shown in FIG. 3, field curvatures in the two directions are small, and the system has a good depth of focus. The distortion curve indicates a relative deviation between a convergence point (an actual image height) of beams in different fields of view and an ideal image height. A reference wavelength of the distortion curve may be 587.5618 nm, and is within 1% shown in FIG. 3, so that it can be ensured that there is no obvious distortion in a picture. It can be learned from FIG. 3 that the camera assembly 200 provided in a first embodiment can implement good imaging quality.

The camera assembly 200 provided in this embodiment has a total system height of 8.50 mm, a total track length TTL of 20.90 mm, an effective focal length EFL of 15.64, a ratio of the total track length TTL to the focal length EFL of 1.34, and an F-number of 2.30. Light can be reflected and folded three times in the light folding element 212, so that the optical camera lens 21 has features of telephoto, a wide aperture, a large target surface, and miniaturization, and the camera assembly 200 can have good imaging quality.

Second embodiment

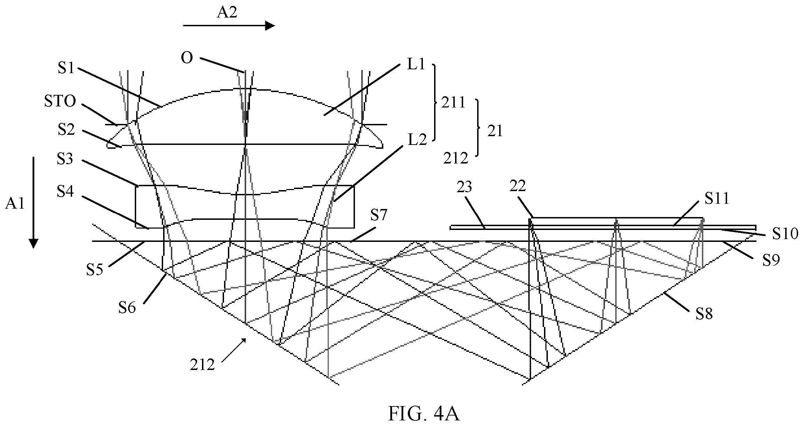

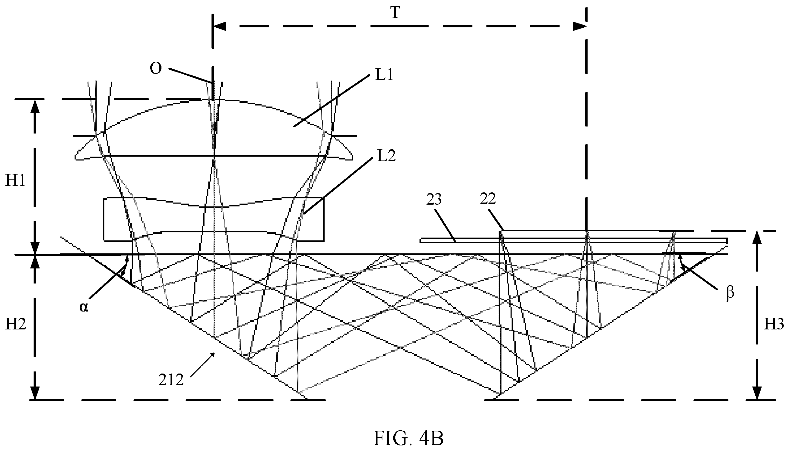

FIG. 4A and FIG. 4B each are a diagram of a structure of the camera assembly 200 according to a second embodiment of this application, and are merely for ease of identification. In this embodiment of this application, the camera assembly 200 includes the optical camera lens 21, the photosensitive element 22, and the light filter 23. Light passes through the optical camera lens 21 and the light filter 23 in sequence, and reaches the photosensitive element 22 for imaging. The optical camera lens 21 includes an aperture STO, the lens group 211, and the light folding element 212 that are disposed in sequence along the optical axis O. The lens group 211 and the photosensitive element 22 are located on a same side of the light folding element 212. The lens group 211 may have a positive focal power. The lens group 211 includes a first lens L1 and a second lens L2. The second lens L2 is located between the first lens L1 and the light folding element 212. The aperture STO may be located on an object-side surface of the first lens L1. In another embodiment, the aperture STO may alternatively be located at another position. This is not limited in this application. In this embodiment, a 1st lens located on the object-side surface in the lens group 211 is the first lens L1.

In this embodiment of this application, the first lens L1 may have a positive focal power, and the first lens L1 includes an object-side surface S1 and an image-side surface S2. The second lens L2 may have a negative focal power, and the second lens L2 includes an object-side surface S3 and an image-side surface S4.

In this embodiment of this application, the light folding element 212 includes the incident surface S5, the first reflective surface S6, the second reflective surface S7, the third reflective surface S8, and the emergent surface S9. The incident surface S5, the second reflective surface S7, and the emergent surface S9 may be coplanar, and any two adjacent surfaces of the incident surface S5, the second reflective surface S7, and the emergent surface S9 may at least overlap. For example, when the incident surface S5 and the second reflective surface S7 may be coplanar, and the incident surface S5 and the second reflective surface S7 overlap, light can be transmitted into the light folding element 212 from an overlapping region of the incident surface S5 and the second reflective surface S7, and the light can also be reflected in the overlapping region of the incident surface S5 and the second reflective surface S7. In another implementation, the incident surface S5, the second reflective surface S7, and the emergent surface S9 may not be coplanar, and two adjacent surfaces of the incident surface S5, the second reflective surface S7, and the emergent surface S9 may not overlap.

Before light emitted by the lens group 211 reaches the photosensitive element 22, the light may be reflected and folded three times in the light folding element 212. Light from the lens group 211 may pass through the incident surface S5 of the light folding element 212 and enter the light folding element 212. At least a part of the light passing through the incident surface S5 is reflected at the first reflective surface S6, where the light is reflected for the first time; at least a part of the light reflected by the first reflective surface S6 is reflected at the second reflective surface S7, where the light is reflected for the second time; and at least a part of the light reflected by the second reflective surface S7 is reflected at the third reflective surface S8, where the light is reflected for the third time, so that at least the part of the light is emitted from the light folding element 212 to the photosensitive element 22 through the emergent surface S9.

In this embodiment of this application, the light folding element 212 may be a prism, for example, may be an isosceles trapezoidal prism. The first reflective surface S6 and the third reflective surface S8 may be two legs of a trapezoid. A surface parallel to the second reflective surface S7 is not shown. In another implementation, the light folding element may be a reflector or another type of light folding element.

In addition, the light filter 23 is disposed behind the light folding element 212, and the light filter 23 includes an object-side surface S10 and an image-side surface S11. An imaging surface S12 (not shown in FIG. 4A and FIG. 4B) is a carrier surface on which an image is formed after light passes through the lens group 211 and the light folding element 212 in the optical camera lens 21 in sequence. The photosensitive element 22 is located on the imaging surface S12.

In this embodiment, the first lens L1 is made of a glass material, and the second lens L2 is made of a plastic material. In another embodiment, the lens group 211 may be made of a glass material or a plastic material, or may be made of both a glass material and a plastic material. This is not limited in this application.

In this embodiment of this application, the lens group 211 may be moved in the first direction A1 to implement focusing, or the light folding element 212 may be moved in the first direction A1 to implement focusing, so as to implement good imaging effect of the optical camera lens 21. The lens group 211 may be moved in the second direction A2 to implement image stabilization, or the photosensitive element 22 may be moved in the second direction A2 to implement image stabilization. This improves imaging effect.

Table 2a shows a curvature radius, a thickness, a refractive index, and an Abbe number of each lens and each light filter in the optical camera lens 21 in a second embodiment. The Abbe number is a dispersion coefficient.

Table 2a

| Surface number | Descriptions | Surface type | Curvature radius | Thickness | Refractive index | Abbe number |
|---|---|---|---|---|---|---|
| OBJ | Object surface | Plane | Infinity | Infinity | | |
| STO | Aperture | Plane | Infinity | -0.895478737 | | |
| S1 | First lens | Aspherical surface | 5.0799 | 1.3688 | 1.81 | 40.99 |
| S2 | | Aspherical surface | 171.9561 | 1.2608 | | |
| S3 | Second lens | Aspherical surface | -3.6124 | 0.6200 | 1.67 | 19.40 |
| S4 | | Aspherical surface | -11.2179 | 0.5503 | | |
| S5 | Light folding element | Spherical surface | Infinity | 2.0500 | 1.63 | 40.59 |
| S6 | | First reflective surface | Infinity | -5.0401 | 1.63 | 40.59 |
| S7 | | Second reflective surface | Infinity | 5.0401 | 1.63 | 40.59 |
| S8 | | Third reflective surface | Infinity | -2.0500 | 1.63 | 40.59 |
| S9 | | Spherical surface | Infinity | -0.3000 | | |
| S10 | Light filter | Spherical surface | Infinity | -0.2100 | 1.52 | 64.20 |
| S11 | | Spherical surface | Infinity | -0.1930 | | |
| S12 | Imaging surface | Plane | | | | |

Table 2b shows an aspheric coefficient of each lens of the optical camera lens 21 in a second embodiment.

Table 2b

| Surface number | K | A4 | A6 | A8 | A10 |
|---|---|---|---|---|---|
| S1 | | -0.0003077 | -1.871E-05 | -1.201E-07 | 3.728E-07 |
| S2 | | -0.0009477 | 0.00013695 | 4.9832E-06 | -1.59E-06 |
| S3 | | 0.03385106 | -0.0039349 | 0.00035323 | 5.3932E-06 |
| S4 | | 0.03101566 | -0.0023613 | 0.0001404 | -2.865E-05 |
| Surface number | A12 | A14 | A16 | A18 | A20 |
| S1 | -1.373E-08 | -3.789E-09 | 5.188E-10 | | |
| Surface number | K | A4 | A6 | A8 | A10 |
| S2 | 7.7899E-08 | 6.4497E-09 | -3.193E-10 | | |
| S3 | -6.919E-06 | 7.676E-07 | 3.9144E-08 | -1.459E-08 | 8.4928E-10 |
| S4 | 1.288E-05 | -1.792E-06 | -1.724E-07 | 6.9644E-08 | -5.291E-09 |

Herein, K is a quadratic surface constant, and symbols such as A4, A6, A8, A10, A12, A14, A16, A18, and A20 indicate aspheric coefficients.

In this embodiment, both the object-side surfaces and the image-side surfaces of the first lens L1 and the second lens L2 are aspherical surfaces, and may be limited by using the following aspherical surface formula:

$$z = \frac{cr^2}{1 + \sqrt{1 - (1+k)c^2r^2}} + \sum_{i=2}^{N} a_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an $i^{th}$-order aspheric coefficient.

Table 2c shows design parameters in a second embodiment of this application. In Table 2c, a diagonal of a semi-sensor is half of a diagonal size of the photosensitive element 22, and a total system height is a sum of H1 and H2. $\alpha$ is an included angle between the first reflective surface S6 and the incident surface S5 of the light folding element 212, and $\beta$ is an included angle between the third reflective surface S8 and the emergent surface S9 of the light folding element 212.

Table 2c

| | |
|---|---|
| EFL/mm | 14.55 |
| Fno | 2.50 |
| Diagonal of a semi-sensor/mm | 3.60 |
| Total system height/mm | 7.22 |
| H1/mm | 3.80 |
| H2/mm | 3.42 |
| H3/mm | 4.03 |
| T/mm | 9.21 |
| TTL/mm | 18.68 |
| TTL/EFL | 1.28 |
| H1/(H1+H2) | 0.53 |
| $\alpha$/° | 33 |
| $\beta$/° | 33 |
| Focus group | Lens group/Light folding element |

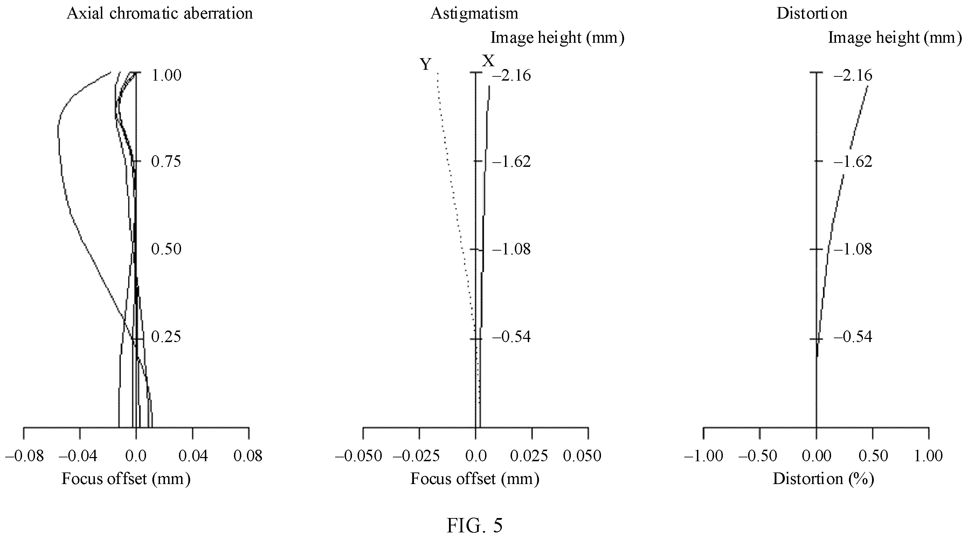

FIG. 5 shows an axial chromatic aberration curve, an astigmatism field curve, and a distortion curve of the optical camera lens according to a second embodiment. The axial chromatic aberration curve represents that a convergence point deviates after light of different wavelengths passes through the lenses of the optical system, and reference wavelengths of the axial chromatic aberration curve are 650.0000 nm, 610.0000 nm, 587.5618 nm, 555.0000 nm, and 470.0000 nm. A physical meaning of the axial chromatic aberration curve is a deviation relative to an ideal image point after light of a corresponding wavelength emitted in a 0-degree field of view passes through the optical camera lens. A horizontal coordinate of the axial chromatic aberration curve is a deviation value in an optical axis direction, and a vertical coordinate of the axial chromatic aberration curve is a normalized coordinate at a pupil. Values in FIG. 5 are all small, and axial aberrations (a spherical aberration, a chromatic aberration, and the like) of the optical camera lens 21 is well corrected. The astigmatism field curve indicates meridional image plane bending and sagittal image plane bending, and indicates a deviation between a convergence point of fine beams in different fields of view and an ideal imaging surface, where a solid line X is a beam in a sagittal direction, and a dashed line Y is a beam in a meridional direction. A horizontal coordinate of the astigmatism field curve is a deviation value in the optical axis direction, and a vertical coordinate of the astigmatism field curve is a corresponding field of view. A reference wavelength of the astigmatism field curve may be 587.5618 nm. When a specific value of a field of view is excessively large, image quality of the field of view is poor or an advanced aberration exists. As shown in FIG. 5, field curvatures in the two directions are small, and the system has a good depth of focus. The distortion curve indicates a relative deviation between a convergence point (an actual image height) of beams in different fields of view and an ideal image height. A reference wavelength of the distortion curve may be 587.5618 nm, and is within 1% shown in FIG. 5, so that it can be ensured that there is no obvious distortion in a picture.

It can be learned from FIG. 5 that the camera assembly 200 provided in a second embodiment can implement good imaging quality. The camera assembly 200 provided in this embodiment has a total system height of 7.22 mm, a total track length TTL of 18.68 mm, an effective focal length EFL of 14.55 mm, a ratio of the total track length TTL to the focal length EFL of 1.28, and an F-number of 2.50. Light can be reflected and folded three times in the light folding element 212, so that the optical camera lens 21 has features of telephoto, a wide aperture, a large target surface, and miniaturization, and the camera assembly 200 can have good imaging quality.

Third embodiment

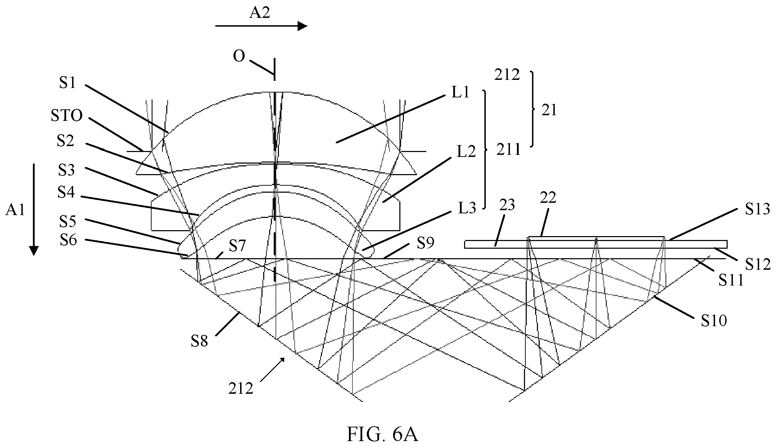

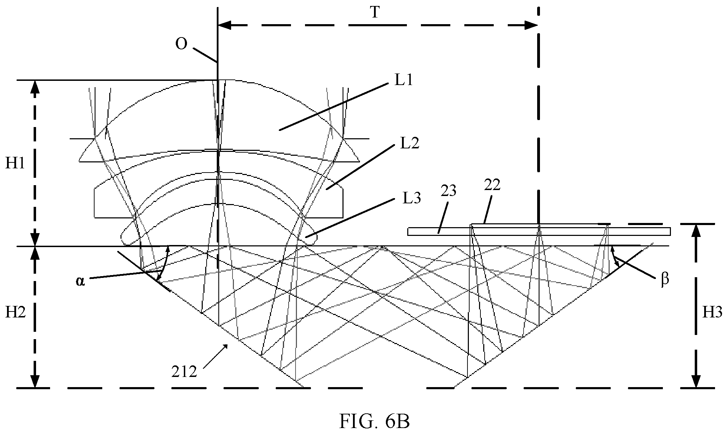

FIG. 6A and FIG. 6B each are a diagram of a structure of the camera assembly 200 according to a third embodiment of this application, and are merely for ease of identification. In this embodiment of this application, the camera assembly 200 includes the optical camera lens 21, the photosensitive element 22, and the light filter 23. Light passes through the optical camera lens 21 and the light filter 23 in sequence, and reaches the photosensitive element 22 for imaging. The optical camera lens 21 includes an aperture STO, the lens group 211, and the light folding element 212 that are disposed in sequence along the optical axis O. The lens group 211 and the photosensitive element 22 are located on a same side of the light folding element 212. The lens group 211 may have a positive focal power. The lens group 211 includes a first lens L1, a second lens L2, and a third lens L3 that are disposed in sequence along the optical axis O, and the third lens L3 is located between the second lens L2 and the light folding element 212. The aperture STO may be located on an object-side surface of the first lens L1. In another implementation, the aperture STO may alternatively be located at another position. This is not limited in this application. In this embodiment, a 1st lens located on the object-side surface in the lens group 211 is the first lens L1.

In this embodiment of this application, the first lens L1 may have a positive focal power, and the first lens L1 includes an object-side surface S1 and an image-side surface S2. The second lens L2 may have a negative focal power, and the second lens L2 includes an object-side surface S3 and an image-side surface S4. The third lens L3 may have a negative focal power, and the third lens L3 includes an object-side surface S5 and an image-side surface S6.

In this embodiment of this application, the light folding element 212 includes an incident surface S7, a first reflective surface S8, a second reflective surface S9, a third reflective surface S10, and the emergent surface S11. The incident surface S7, the second reflective surface S9, and the emergent surface S11 may be coplanar, and any two adjacent surfaces of the incident surface S7, the second reflective surface S9, and the emergent surface S11 may at least overlap. For example, when the incident surface S7 and the second reflective surface S9 may be coplanar, and the incident surface S7 and the second reflective surface S9 overlap, light can be transmitted into the light folding element 212 from an overlapping region of the incident surface S7 and the second reflective surface S9, and the light can also be reflected in the overlapping region of the incident surface S7 and the second reflective surface S9. In another implementation, the incident surface S7, the second reflective surface S9, and the emergent surface S11 may not be coplanar, and two adjacent surfaces of the incident surface S7, the second reflective surface S9, and the emergent surface S11 may not overlap.

Before light emitted by the lens group 211 reaches the photosensitive element 22, the light may be reflected and folded three times in the light folding element 212. Light from the lens group 211 may pass through the incident surface S7 of the light folding element 212 and enter the light folding element 212. At least a part of the light passing through the incident surface S7 is reflected at the first reflective surface S8, where the light is reflected for the first time; at least a part of the light reflected by the first reflective surface S8 is reflected at the second reflective surface S9, where the light is reflected for the second time; and at least a part of the light reflected by the second reflective surface S9 is reflected at the third reflective surface S10, where the light is reflected for the third time, so that at least the part of the light is emitted from the light folding element 212 to the photosensitive element 22 through the emergent surface S11.

In this embodiment of this application, the light folding element 212 may be a prism, for example, may be an isosceles trapezoidal prism. The first reflective surface S8 and the third reflective surface S10 may be two legs of a trapezoid. In another implementation, the light folding element may be a reflector or another type of light folding element.

In addition, the light filter 23 is disposed behind the light folding element 212, and the light filter 23 includes an object-side surface S12 and an image-side surface S13. An imaging surface S14 (not shown in FIG. 6A and FIG. 6B) is a carrier surface on which an image is formed after light passes through the lens group 211 and the light folding element 212 in the optical camera lens 21 in sequence. The photosensitive element 22 is located on the imaging surface S14.

In this embodiment, the first lens L1 may be made of a glass material, and both the second lens L2 and the third lens L3 may be made of a plastic material. In another embodiment, the lens group 211 may be made of a glass material or a plastic material, or may be made of both a glass material and a plastic material. This is not limited in this application.

In this embodiment of this application, the lens group 211 may be moved in the first direction A1 to implement focusing, or the light folding element 212 may be moved in the first direction A1 to implement focusing, so as to implement good imaging effect of the optical camera lens 21. The lens group 211 may be moved in the second direction A2 to implement image stabilization, or the photosensitive element 22 may be moved in the second direction A2 to implement image stabilization. This improves imaging effect.

Table 3a shows a curvature radius, a thickness, a refractive index, and an Abbe number of each lens and each light filter in the optical camera lens 21 in a third embodiment. The Abbe number is a dispersion coefficient.

Table 3a

| Surface number | Descriptions | Surface type | Curvature radius | Thickness | Refractive index | Abbe number |
|---|---|---|---|---|---|---|
| OBJ | Object surface | Plane | Infinity | Infinity | | |
| STO | Aperture | Plane | Infinity | -1.664 | | |
| S1 | First lens | Spherical surface | 5.4316 | 1.9812 | 1.81 | 40.99 |
| S2 | | Spherical surface | 19.3795 | 0.0500 | | |
| S3 | Second lens | Aspherical surface | 13.6440 | 0.5812 | 1.67 | 19.40 |
| S4 | | Aspherical surface | 5.3096 | 0.1908 | | |
| S5 | Third lens | Aspherical surface | 3.6682 | 0.7036 | 1.54 | 55.91 |
| S6 | | Aspherical surface | 3.3653 | 1.1933 | | |
| S7 | Light folding element | Spherical surface | Infinity | 2.2500 | 1.58 | 52.86 |
| S8 | | First reflective surface | Infinity | -5.5318 | 1.58 | 52.86 |
| S9 | | Second reflective surface | Infinity | 5.5318 | 1.58 | 52.86 |
| S10 | | Third reflective surface | Infinity | -2.2500 | 1.58 | 52.86 |
| S11 | | Spherical surface | Infinity | -0.3000 | | |
| S12 | Light filter | Spherical surface | Infinity | -0.2100 | 1.52 | 64.20 |
| S13 | | Spherical surface | Infinity | -0.1239 | | |
| S14 | Imaging surface | Plane | | | | |

Table 3b shows an aspheric coefficient of each lens of the optical camera lens 21 in a third embodiment.

Table 3b

| Surface number | K | A4 | A6 | A8 | A10 |
|---|---|---|---|---|---|
| S3 | | 6.3108E-03 | -7.7448E-04 | 5.0525E-05 | 8.4287E-06 |
| S4 | | 1.5098E-02 | -3.0636E-03 | 6.1283E-04 | -3.6946E-05 |
| S5 | | 8.4503E-03 | -4.1519E-03 | 1.1100E-03 | -1.6903E-04 |

(continued)

| Surface number | K | A4 | A6 | A8 | A10 |
|---|---|---|---|---|---|
| S6 | | 9.1882E-04 | -1.4227E-03 | 1.8554E-04 | 8.6484E-05 |
| Surface number | A12 | A14 | A16 | A18 | A20 |
| S3 | -2.9355E-06 | 3.8363E-07 | -2.6629E-08 | 9.6507E-10 | -1.4350E-11 |
| S4 | -3.0691E-06 | -4.2816E-07 | 2.8470E-07 | -3.5170E-08 | 1.4950E-09 |
| S5 | 1.9752E-05 | -3.0197E-06 | 3.7355E-07 | -2.3669E-08 | 5.7362E-10 |
| S6 | -4.2406E-05 | 7.2323E-06 | -6.3633E-07 | 3.1289E-08 | -8.2065E-10 |

Herein, K is a quadratic surface constant, and symbols such as A4, A6, A8, A10, A12, A14, A16, A18, and A20 indicate aspheric coefficients.

In this embodiment, both the object-side surfaces and the image-side surfaces of the second lens L2 and the third lens L3 are aspherical surfaces, and may be limited by using the following aspherical surface formula:

$$z = \frac{cr^2}{1 + \sqrt{1 - (1+k)c^2 r^2}} + \sum_{i=2}^{N} a_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an $i^{th}$-order aspheric coefficient.

Table 3c shows design parameters in a third embodiment of this application. In Table 3c, a diagonal of a semi-sensor is half of a diagonal size of the photosensitive element 22, and a total system height is a sum of H1 and H2. $\alpha$ is an included angle between the first reflective surface S8 and the incident surface S7 of the light folding element 212, and $\beta$ is an included angle between the third reflective surface S10 and the emergent surface S11 of the light folding element 212.

Table 3c

| | |
|---|---|
| EFL/mm | 16.88 |
| Fno | 2.10 |
| Diagonal of a semi-sensor/mm | 3.60 |
| Total system height/mm | 8.50 |
| H1/mm | 4.70 |
| H2/mm | 3.80 |
| H3/mm | 4.30 |
| T/mm | 10.00 |
| TTL/mm | 20.90 |
| TTL/EFL | 1.24 |
| H1/(H1+H2) | 0.55 |
| $\alpha$/° | 33 |
| $\beta$/° | 33 |
| Focus group | Lens group/Light folding element |

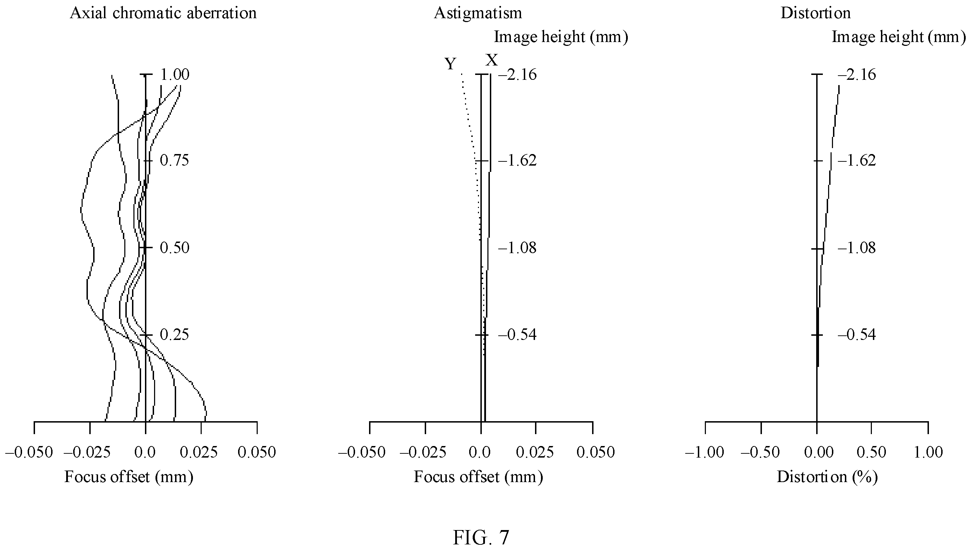

FIG. 7 shows an axial chromatic aberration curve, an astigmatism field curve, and a distortion curve of the optical camera lens 21 according to a third embodiment. The axial chromatic aberration curve represents that a convergence point deviates after light of different wavelengths passes through the lenses of the optical system, and reference wavelengths of the axial chromatic aberration curve are 650.0000 nm, 610.0000 nm, 587.5618 nm, 555.0000 nm, and 470.0000 nm. A physical meaning of the axial chromatic aberration curve is a deviation relative to an ideal image point after light of a corresponding wavelength emitted in a 0-degree field of view passes through the optical camera lens. A horizontal coordinate of the axial chromatic aberration curve is a deviation value in an optical axis direction, and a vertical coordinate of the axial chromatic aberration curve is a normalized coordinate at a pupil. Values in FIG. 7 are all small, and axial aberrations (a spherical aberration, a chromatic aberration, and the like) of the optical camera lens 21 is well corrected. The astigmatism field curve indicates meridional image plane bending and sagittal image plane bending, and indicates a deviation between a convergence point of fine beams in different fields of view and an ideal imaging surface, where a solid line X is a beam in a sagittal direction, and a dashed line Y is a beam in a meridional direction. A horizontal coordinate of the astigmatism field curve is a deviation value in the optical axis direction, and a vertical coordinate of the astigmatism field curve is a corresponding field of view. A reference wavelength of the astigmatism field curve may be 587.5618 nm. When a specific value of a field of view is excessively large, image quality of the field of view is poor or an advanced aberration exists. As shown in FIG. 7, field curvatures in the two directions are small, and the system has a good depth of focus. The distortion curve indicates a relative deviation between a convergence point (an actual image height) of beams in different fields of view and an ideal image height. A reference wavelength of the distortion curve may be 587.5618 nm, and is within 1% shown in FIG. 7, so that it can be ensured that there is no obvious distortion in a picture. It can be learned from FIG. 7 that the camera assembly 200 provided in a third embodiment can implement good imaging quality.

The camera assembly 200 provided in this embodiment has a total system height of 8.50 mm, a total track length TTL of 20.90 mm, an effective focal length EFL of 16.88 mm, a ratio of the total track length TTL to the focal length EFL of 1.24, and an F-number of 2.10. Light can be reflected and folded three times in the light folding element 212, so that the optical camera lens 21 has features of telephoto, a wide aperture, a large target surface, and miniaturization, and the camera assembly 200 can have good imaging quality.

Fourth embodiment

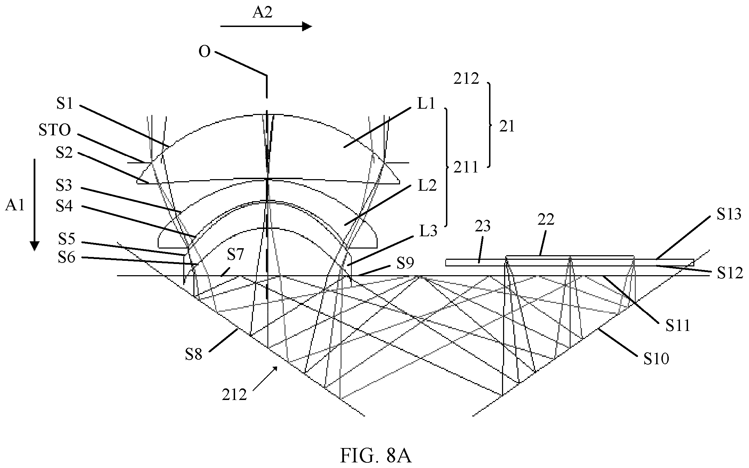

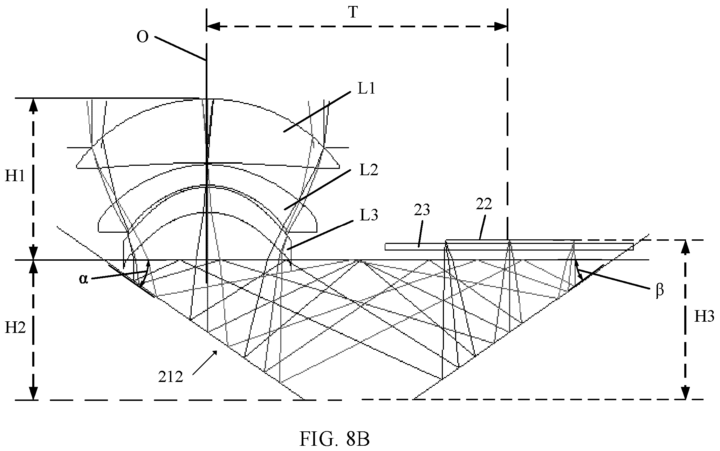

FIG. 8A and FIG. 8B each are a diagram of a structure of the camera assembly 200 according to a fourth embodiment of this application, and are merely for ease of identification. In this embodiment of this application, the camera assembly 200 includes the optical camera lens 21, the photosensitive element 22, and the light filter 23. Light passes through the optical camera lens 21 and the light filter 23 in sequence, and reaches the photosensitive element 22 for imaging. The optical camera lens 21 includes an aperture STO, the lens group 211, and the light folding element 212 that are disposed in sequence along the optical axis O. The lens group 211 and the photosensitive element 22 are located on a same side of the light folding element 212. The lens group 211 may have a positive focal power. The lens group 211 includes a first lens L1, a second lens L2, and a third lens L3 that are disposed in sequence along the optical axis O, and the third lens L3 is located between the second lens L2 and the light folding element 212. The aperture STO may be located on an object-side surface of the first lens L1. In another implementation, the aperture STO may alternatively be located at another position. This is not limited in this application. In this embodiment, a 1st lens located on the object-side surface in the lens group 211 is the first lens L1.

In this embodiment, the first lens L1 may have a positive focal power, and the first lens L1 includes an object-side surface S1 and an image-side surface S2. The second lens L2 may have a negative focal power, and the second lens L2 includes an object-side surface S3 and an image-side surface S4. The third lens L3 may have a positive focal power, and the third lens L3 includes an object-side surface S5 and an image-side surface S6.

In this embodiment of this application, the light folding element 212 includes an incident surface S7, a first reflective surface S8, a second reflective surface S9, a third reflective surface S10, and the emergent surface S11. The incident surface S7, the second reflective surface S9, and the emergent surface S11 may be coplanar, and any two adjacent surfaces of the incident surface S7, the second reflective surface S9, and the emergent surface S11 may at least overlap. For example, when the incident surface S7 and the second reflective surface S9 may be coplanar, and the incident surface S7 and the second reflective surface S9 overlap, light can be transmitted into the light folding element 212 from an overlapping region of the incident surface S7 and the second reflective surface S9, and the light can also be reflected in the overlapping region of the incident surface S7 and the second reflective surface S9. In another implementation, the incident surface S7, the second reflective surface S9, and the emergent surface S11 may not be coplanar, and two adjacent surfaces of the incident surface S7, the second reflective surface S9, and the emergent surface S11 may not overlap.

Before light emitted by the lens group 211 reaches the photosensitive element 22, the light may be reflected and folded three times in the light folding element 22. Light from the lens group 211 may pass through the incident surface S7 of the light folding element 212 and enter the light folding element 212. At least a part of the light passing through the incident surface S7 is reflected at the first reflective surface S8, where the light is reflected for the first time; at least a part of the light reflected by the first reflective surface S8 is reflected at the second reflective surface S9, where the light is reflected for the second time; and at least a part of the light reflected by the second reflective surface S9 is reflected at the third reflective surface S10, where the light is reflected for the third time, so that at least the part of the light is emitted from the light folding element 212 to the photosensitive element 22 through the emergent surface S11.

In this embodiment of this application, the light folding element 212 may be a prism, for example, may be an isosceles trapezoidal prism. The first reflective surface S8 and the third reflective surface S10 may be two legs of a trapezoid. In another implementation, the light folding element may be a reflector or another type of light folding element.

In addition, the light filter 23 is disposed behind the light folding element 212, and the light filter 23 includes an object-side surface S12 and an image-side surface S13. An imaging surface S14 (not shown in FIG. 8A and FIG. 8B) is a carrier surface on which an image is formed after light passes through the lens group 211 and the light folding element 212 in the optical camera lens 21 in sequence. The photosensitive element 22 is located on the imaging surface S14.

In this embodiment, the first lens L1, the second lens L2, and the third lens L3 may all be made of a plastic material. In another embodiment, the lens group 211 may be made of a glass material or a plastic material, or may be made of both a glass material and a plastic material. This is not limited in this application.

In this embodiment of this application, the lens group 211 may be moved in the first direction A1 to implement focusing, or the light folding element 212 may be moved in the first direction A1 to implement focusing, so as to implement good imaging effect of the optical camera lens 21. The lens group 211 may be moved in the second direction A2 to implement image stabilization, or the photosensitive element 22 may be moved in the second direction A2 to implement image stabilization. This improves imaging effect.

Table 4a shows a curvature radius, a thickness, a refractive index, and an Abbe number of each lens and each light filter in the optical camera lens 21 in a fourth embodiment. The Abbe number is a dispersion coefficient.

Table 4a

| Surface number | Descriptions | Surface type | Curvature radius | Thickness | Refractive index | Abbe number |
|---|---|---|---|---|---|---|
| OBJ | Object surface | Plane | Infinity | Infinity | | |
| STO | Aperture | Plane | Infinity | -1.496601459 | | |
| S1 | First lens | Aspherical surface | 6.3490 | 1.9844 | 1.54 | 55.91 |
| S2 | | Aspherical surface | 32.4013 | 0.0500 | | |
| S3 | Second lens | Aspherical surface | 3.7378 | 0.6409 | 1.67 | 19.40 |
| S4 | | Aspherical surface | 2.8669 | 0.0651 | | |
| S5 | Third lens | Aspherical surface | 2.8658 | 0.7750 | 1.54 | 55.91 |
| S6 | | Aspherical surface | 2.7986 | 1.4846 | | |
| S7 | Light folding element | Spherical surface | Infinity | 2.2500 | 1.58 | 52.86 |
| S8 | | First reflective surface | Infinity | -5.5318 | 1.58 | 52.86 |
| S9 | | Second reflective surface | Infinity | 5.5318 | 1.58 | 52.86 |
| S10 | | Third reflective surface | Infinity | -2.2500 | 1.58 | 52.86 |
| S11 | | Spherical surface | Infinity | -0.3000 | | |
| S12 | Light filter | Spherical surface | Infinity | -0.2100 | 1.52 | 64.20 |
| S13 | | Spherical surface | Infinity | -0.1239 | | |
| S14 | Imaging surface | Plane | | | | |

Table 4b shows an aspheric coefficient of each lens of the optical camera lens 21 in a fourth embodiment.

Table 4b

| Surface number | K | A4 | A6 | A8 | A10 |
|---|---|---|---|---|---|
| S1 | | 0.00125023 | -7.041E-05 | 3.9316E-06 | -2.348E-07 |
| S2 | | -0.0001038 | -9.825E-05 | 8.8403E-06 | 5.2888E-08 |
| S3 | | -0.0072349 | 0.00032072 | -1.519E-05 | 9.0959E-06 |
| S4 | | 0.00226179 | -0.0043723 | 0.00088408 | -4.99E-05 |
| S5 | | 0.01550639 | -0.0067425 | 0.00125154 | -0.0001563 |

(continued)

| Surface number | K | A4 | A6 | A8 | A10 |
|---|---|---|---|---|---|
| S6 | | 0.00455361 | -0.0010631 | -0.0002371 | 9.9344E-05 |
| Surface number | A12 | A14 | A16 | A18 | A20 |
| S1 | 2.6645E-09 | 9.6815E-10 | -3.517E-11 | | |
| S2 | -1.351E-08 | -6.37E-10 | 3.6791E-11 | | |
| S3 | -2.716E-06 | 3.8609E-07 | -2.833E-08 | 8.3771E-10 | -2.609E-12 |
| S4 | -4.164E-06 | -5.656E-07 | 2.9553E-07 | -2.849E-08 | 5.791E-10 |
| S5 | 1.7088E-05 | -3.061E-06 | 4.0302E-07 | -2.364E-08 | 1.4292E-10 |
| S6 | -3.592E-05 | 7.1173E-06 | -7.327E-07 | 2.9415E-08 | -1.92E-10 |

Herein, K is a quadratic surface constant, and symbols such as A4, A6, A8, A10, A12, A14, A16, A18, and A20 indicate aspheric coefficients.

In this embodiment, the object-side surfaces and the image-side surfaces of the first lens L1, the second lens L2, and the third lens L3 are all aspherical surfaces, and may be limited by using the following aspherical surface formula:

$$z = \frac{cr^2}{1 + \sqrt{1 - (1+k)c^2r^2}} + \sum_{i=2}^{N} a_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an $i^{th}$-order aspheric coefficient.

Table 4c shows design parameters in a fourth embodiment of this application. In Table 4c, a diagonal of a semi-sensor is half of a diagonal size of the photosensitive element 22, and a total system height is a sum of H1 and H2. $\alpha$ is an included angle between the first reflective surface S8 and the incident surface S7 of the light folding element 212, and $\beta$ is an included angle between the third reflective surface S10 and the emergent surface S11 of the light folding element 212.

Table 4c

| EFL/mm | 17.07 |
|---|---|
| Fno | 2.20 |
| Diagonal of a semi-sensor/mm | 3.60 |
| Total system height/mm | 8.80 |
| H1/mm | 5.00 |
| H2/mm | 3.80 |
| H3/mm | 4.30 |
| T/mm | 10.00 |
| TTL/mm | 21.20 |
| TTL/EFL | 1.24 |
| H1/(H1+H2) | 0.57 |
| $\alpha$/° | 33 |
| $\beta$/° | 33 |
| Focus group | Lens group/Light folding element |

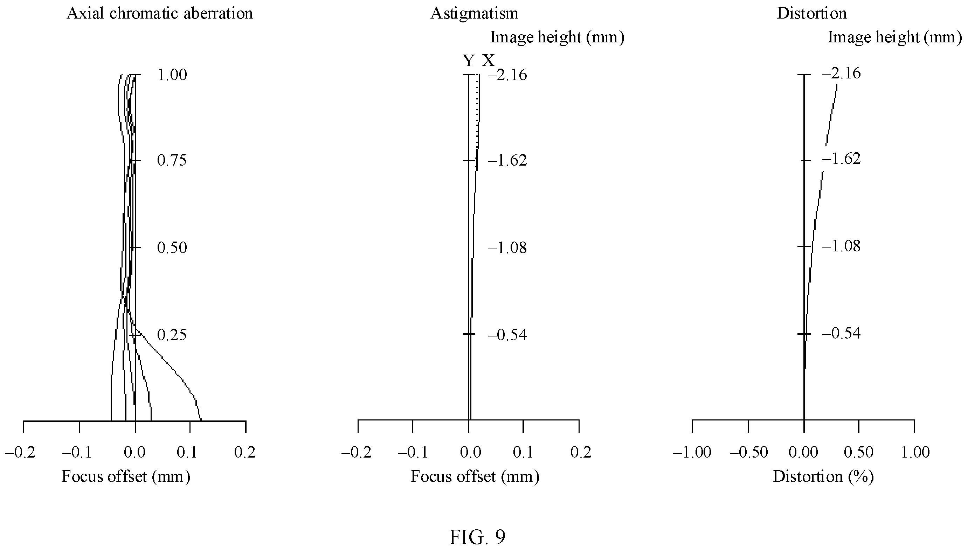

FIG. 9 shows an axial chromatic aberration curve, an astigmatism field curve, and a distortion curve of the optical camera lens 21 according to a fourth embodiment. The axial chromatic aberration curve represents that a convergence point deviates after light of different wavelengths passes through the lenses of the optical system, and reference wavelengths of the axial chromatic aberration curve are 650.0000 nm, 610.0000 nm, 587.5618 nm, 555.0000 nm, and 470.0000 nm. A physical meaning of the axial chromatic aberration curve is a deviation relative to an ideal image point after light of a corresponding wavelength emitted in a 0-degree field of view passes through the optical camera lens. A horizontal coordinate of the axial chromatic aberration curve is a deviation value in an optical axis direction, and a vertical coordinate of the axial chromatic aberration curve is a normalized coordinate at a pupil. Values in FIG. 9 are all small, and axial aberrations (a spherical aberration, a chromatic aberration, and the like) of the optical camera lens 21 is well corrected. The astigmatism field curve indicates meridional image plane bending and sagittal image plane bending, and indicates a deviation between a convergence point of fine beams in different fields of view and an ideal imaging surface, where a solid line X is a beam in a sagittal direction, and a dashed line Y is a beam in a meridional direction. A horizontal coordinate of the astigmatism field curve is a deviation value in the optical axis direction, and a vertical coordinate of the astigmatism field curve is a corresponding field of view. A reference wavelength of the astigmatism field curve may be 587.5618 nm. When a specific value of a field of view is excessively large, image quality of the field of view is poor or an advanced aberration exists. As shown in FIG. 9, field curvatures in the two directions are small, and the system has a good depth of focus. The distortion curve indicates a relative deviation between a convergence point (an actual image height) of beams in different fields of view and an ideal image height. A reference wavelength of the distortion curve may be 587.5618 nm, and is within 1% shown in FIG. 9, so that it can be ensured that there is no obvious distortion in a picture. It can be learned from FIG. 9 that the camera assembly 200 provided in a fourth embodiment can implement good imaging quality.

The camera assembly 200 provided in this embodiment has a total system height of 8.80 mm, a total track length TTL of 21.20 mm, an effective focal length EFL of 17.07 mm, a ratio of the total track length TTL to the focal length EFL of 1.24, and an F-number of 2.20. Light can be folded three times in the light folding element 212, so that the optical camera lens group has a long focal length. In other words, the optical camera lens 21 has telephoto and wide aperture photographing effect while a small axial occupation size meets miniaturization, and the camera assembly 200 can have good imaging quality.

Fifth embodiment

As shown in FIG. 10A and FIG. 10B, in this embodiment of this application, the camera assembly 200 includes the optical camera lens 21, the photosensitive element 22, and the light filter 23. Light passes through the optical camera lens 21 and the light filter 23 in sequence, and reaches the photosensitive element 22 for imaging. The optical camera lens 21 includes an aperture STO, the lens group 211, and the light folding element 212 that are disposed in sequence along the optical axis O. The lens group 211 and the photosensitive element 22 are located on a same side of the light folding element 212. The lens group 211 may have a positive focal power. The lens group 211 includes a first lens L1 and a second lens L2. The second lens L2 is located between the first lens L1 and the light folding element 212. The aperture STO is located on an object-side surface of the first lens L1. In another implementation, the aperture STO may alternatively be located at another position. This is not limited in this application. In this embodiment, a $1^{st}$ lens located on the object-side surface in the lens group 211 is the first lens L1.

In this embodiment of this application, the first lens L1 may have a positive focal power, and the first lens L1 includes an object-side surface S1 and an image-side surface S2. The second lens L2 may have a negative focal power, and the second lens L2 includes an object-side surface S3 and an image-side surface S4.

In this embodiment of this application, the light folding element 212 includes an incident surface S5, a first reflective surface S6, a second reflective surface S7, a third reflective surface S8, a fourth reflective surface S9, a fifth reflective surface S10, and the emergent surface S11. The incident surface S5, the second reflective surface S7, the fourth reflective surface S9, and the emergent surface S11 may be coplanar, and the incident surface S5, the second reflective surface S7, the fourth reflective surface S9, and the emergent surface S11 may be located on a same side of the light folding element 212. Any two surfaces, any three surfaces, or all four surfaces of the incident surface S5, the second reflective surface S7, the fourth reflective surface S9, and the emergent surface S11 may be coplanar. In other words, two or more of the incident surface S5, the second reflective surface S7, the fourth reflective surface S9, and the emergent surface S11 may be coplanar. A coplanar design can reduce difficulty in manufacturing the light folding element 212. Any two adjacent surfaces of the incident surface S5, the second reflective surface S7, the fourth reflective surface S9, and the emergent surface S11 may at least overlap. For example, when the incident surface S5 and the second reflective surface S7 may be coplanar, and the incident surface S5 and the second reflective surface S7 overlap, light can be transmitted into the light folding element 212 from an overlapping region of the incident surface S5 and the second reflective surface S7, and the light can also be reflected in the overlapping region of the incident surface S5 and the second reflective surface S7. In another implementation, the incident surface S5, the second reflective surface S7, the fourth reflective surface S9, and the emergent surface S11 may not be coplanar, and two adjacent surfaces of the incident surface S5, the second reflective surface S7, the fourth reflective surface S9, and the emergent surface S11 may not overlap. In this embodiment, a bottom surface of the light folding element 212 is the third reflective surface S8.

Before light emitted by the lens group 211 reaches the photosensitive element 22, the light may be reflected and folded five times in the light folding element 22. Light from the lens group 211 may pass through the incident surface S5 of the light folding element 212 and enter the light folding element 212. Reflection of the light at the plurality of reflective surfaces of the light folding element 212 includes: reflection, at the first reflective surface S6, of at least a part of the light passing through the incident surface S5, where the light is reflected for the first time; reflection, at the second reflective surface S7, of at least a part of the light reflected by the first reflective surface S6, where the light is reflected for the second time; reflection, at the third reflective surface S8, of at least a part of the light reflected by the second reflective surface S7, where the light is reflected for the third time; reflection, at the fourth reflective surface S9, of at least a part of the light reflected by the third reflective surface S8, where the light is reflected for the fourth time; and reflection, at the fifth reflective surface S10, of at least a part of the light reflected by the fourth reflective surface S9, where the light is reflected for the fifth time, so that at least the part of light passes through the emergent surface S11 and is emitted from the light folding element 212 to the photosensitive element 22. In this embodiment, a bottom surface of the light folding element 212 is the third reflective surface S8. The bottom surface of the light folding element 212 is parallel to the incident surface S5.

In this embodiment of this application, the light folding element 212 may be a prism, for example, may be an isosceles trapezoidal prism. The incident surface S5, the second reflective surface S7, the fourth reflective surface S9, and the emergent surface S11 are all parallel to the third reflective surface S8. In another implementation, the light folding element may be a reflector or another type of light folding element.

In addition, the light filter 23 is disposed behind the light folding element 212, and the light filter 23 includes an object-side surface S12 and an image-side surface S13. An imaging surface S14 (not shown in FIG. 10A and FIG. 10B) is a carrier surface on which an image is formed after light passes through the lens group 211 and the light folding element 212 in the optical camera lens 21 in sequence. The photosensitive element 22 is located on the imaging surface S14.

In this embodiment, the first lens L1 may be made of a glass material, and the second lens L2 may be made of a plastic material. In another embodiment, the lens group 211 may be made of a glass material or a plastic material, or may be made of both a glass material and a plastic material. This is not limited in this application.

In this embodiment of this application, the lens group 211 may be moved in the first direction A1 to implement focusing, or the light folding element 212 may be moved in the first direction A1 to implement focusing, so as to implement good imaging effect of the optical camera lens 21. The lens group 211 may be moved in the second direction A2 to implement image stabilization, or the photosensitive element 22 may be moved in the second direction A2 to implement image stabilization. This improves imaging effect.

Table 5a shows a curvature radius, a thickness, a refractive index, and an Abbe number of each lens and each light filter in the optical camera lens 21 in a fifth embodiment. The Abbe number is a dispersion coefficient.

Table 5a

| Surface number | Descriptions | Surface type | Curvature radius | Thickness | Refractive index | Abbe number |
|---|---|---|---|---|---|---|
| OBJ | Object surface | Plane | Infinity | Infinity | | |
| STO | Aperture | Plane | Infinity | -1.470576933 | | |
| S1 | First lens | Spherical surface | 9.5269 | 2.8632 | 1.81 | 40.99 |
| S2 | | Spherical surface | 50.0283 | 0.0500 | | |
| S3 | Second lens | Aspherical surface | 7.5098 | 0.9415 | 1.67 | 19.40 |
| S4 | | Aspherical surface | 4.4940 | 1.5453 | | |
| S5 | | Spherical surface | Infinity | 2.5000 | 1.46 | 90.27 |
| S6 | | First reflective surface | Infinity | -5.0000 | 1.46 | 90.27 |
| S7 | | Second reflective surface | Infinity | 8.8000 | 1.46 | 90.27 |
| S8 | Light folding element | Third reflective surface | Infinity | -8.8000 | 1.46 | 90.27 |
| S9 | | Fourth reflective surface | Infinity | 5.0000 | 1.46 | 90.27 |
| S10 | | Fifth reflective surface | Infinity | -2.5000 | 1.46 | 90.27 |
| S11 | | Spherical surface | Infinity | -0.1000 | | |
| S12 | Light filter | Spherical surface | Infinity | -0.2100 | 1.52 | 64.20 |
| S13 | | Spherical surface | Infinity | -0.2900 | | |

(continued)

| Surface number | Descriptions | Surface type | Curvature radius | Thickness | Refractive index | Abbe number |
|---|---|---|---|---|---|---|
| S14 | Imaging surface | Plane | | | | |

Table 5b shows an aspheric coefficient of each lens of the optical camera lens 21 in a fifth embodiment.

Table 5b

| Surface number | K | A4 | A6 | A8 | A10 |
|---|---|---|---|---|---|
| S3 | | -1.5081E-03 | -1.7240E-05 | 8.6674E-06 | -8.0461E-07 |
| S4 | | -2.2375E-03 | -8.2841E-05 | 2.4097E-05 | -3.2836E-06 |
| Surface number | A12 | A14 | A16 | A18 | A20 |
| S3 | -6.4185E-09 | 7.0189E-09 | -5.6346E-10 | 1.9222E-11 | -2.4984E-13 |
| S4 | 6.3865E-08 | 2.9762E-08 | -3.5311E-09 | 1.6406E-10 | -2.8817E-12 |

Herein, K is a quadratic surface constant, and symbols such as A4, A6, A8, A10, A12, A14, A16, A18, and A20 indicate aspheric coefficients.

In this embodiment, both the object-side surface and the image-side surface of the second lens L2 are aspherical surfaces, and may be limited by using but not limited to the following aspherical surface formula:

$$z = \frac{cr^2}{1 + \sqrt{1 - (1+k)c^2r^2}} + \sum_{i=2}^{N} \alpha_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an $i^{th}$-order aspheric coefficient.

Table 5c shows design parameters in a fifth embodiment of this application. In Table 5c, a diagonal of a semi-sensor is half of a diagonal size of the photosensitive element 22, and a total system height is a sum of H1 and H2. $\alpha$ is an included angle between the first reflective surface S6 and the incident surface S5 of the light folding element 212, and $\beta$ is an included angle between the fifth reflective surface S10 and the emergent surface S11 of the light folding element 212.

Table 5c

| | |
|---|---|
| EFL/mm | 31.40 |
| Fno | 3.14 |
| Diagonal of a semi-sensor/mm | 3.60 |
| Total system height/mm | 9.80 |
| H1/mm | 5.40 |
| H2/mm | 4.40 |
| H3/mm | 5.00 |
| T/mm | 23.90 |
| TTL/mm | 38.60 |
| TTL/EFL | 1.23 |
| H1/(H1+H2) | 0.55 |
| $\alpha$/° | 30 |
| $\beta$/° | 30 |

(continued)

| Focus group | Lens group/Light folding element |
| --- | --- |

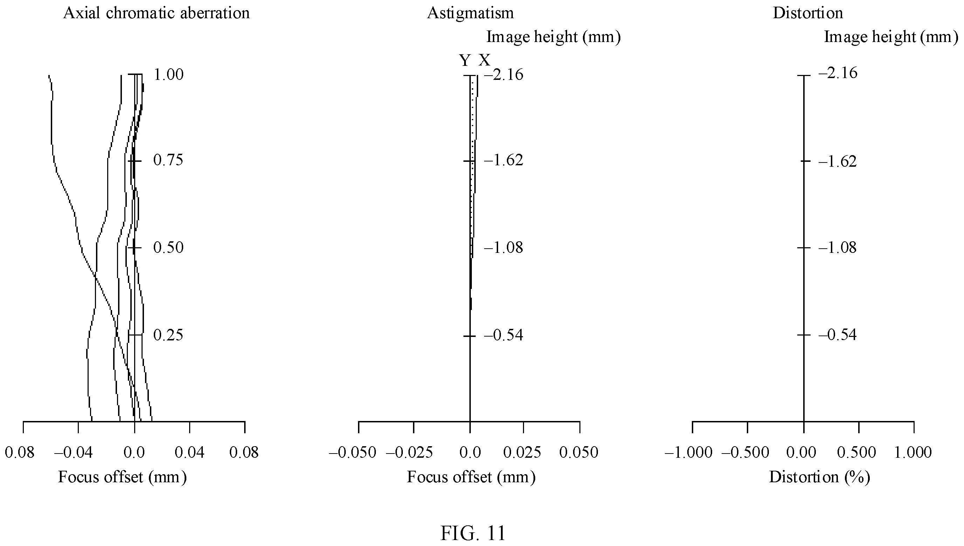

FIG. 11 shows an axial chromatic aberration curve, an astigmatism field curve, and a distortion curve of the optical camera lens according to a fifth embodiment. The axial chromatic aberration curve represents that a convergence point deviates after light of different wavelengths passes through the lenses of the optical system, and reference wavelengths of the axial chromatic aberration curve are 650.0000 nm, 610.0000 nm, 587.5618 nm, 555.0000 nm, and 470.0000 nm. A physical meaning of the axial chromatic aberration curve is a deviation relative to an ideal image point after light of a corresponding wavelength emitted in a 0-degree field of view passes through the optical camera lens. A horizontal coordinate of the axial chromatic aberration curve is a deviation value in an optical axis direction, and a vertical coordinate of the axial chromatic aberration curve is a normalized coordinate at a pupil. Values in FIG. 11 are all small, and axial aberrations (a spherical aberration, a chromatic aberration, and the like) of the optical camera lens 21 is well corrected. The astigmatism field curve indicates meridional image plane bending and sagittal image plane bending, and indicates a deviation between a convergence point of fine beams in different fields of view and an ideal imaging surface, where a solid line X is a beam in a sagittal direction, and a dashed line Y is a beam in a meridional direction. A horizontal coordinate of the astigmatism field curve is a deviation value in the optical axis direction, and a vertical coordinate of the astigmatism field curve is a corresponding field of view. A reference wavelength of the astigmatism field curve may be 587.5618 nm. When a specific value of a field of view is excessively large, image quality of the field of view is poor or an advanced aberration exists. As shown in FIG. 11, field curvatures in the two directions are small, and the system has a good depth of focus. The distortion curve indicates a relative deviation between a convergence point (an actual image height) of beams in different fields of view and an ideal image height. A reference wavelength of the distortion curve may be 587.5618 nm, and is within 1% shown in FIG. 11, so that it can be ensured that there is no obvious distortion in a picture. It can be learned from FIG. 11 that the camera assembly 200 provided in a fifth embodiment can implement good imaging quality.

The camera assembly 200 provided in this embodiment has a total system height of 9.80 mm, a total track length TTL of 38.60 mm, an effective focal length EFL of 31.40 mm, a ratio of the total track length TTL to the focal length EFL of 1.23, and an F-number of 3.14. Light can be reflected and folded five times in the light folding element 212, so that the optical camera lens 21 has features of telephoto, a wide aperture, a large target surface, and miniaturization, and the camera assembly 200 can have good imaging quality.

Sixth embodiment

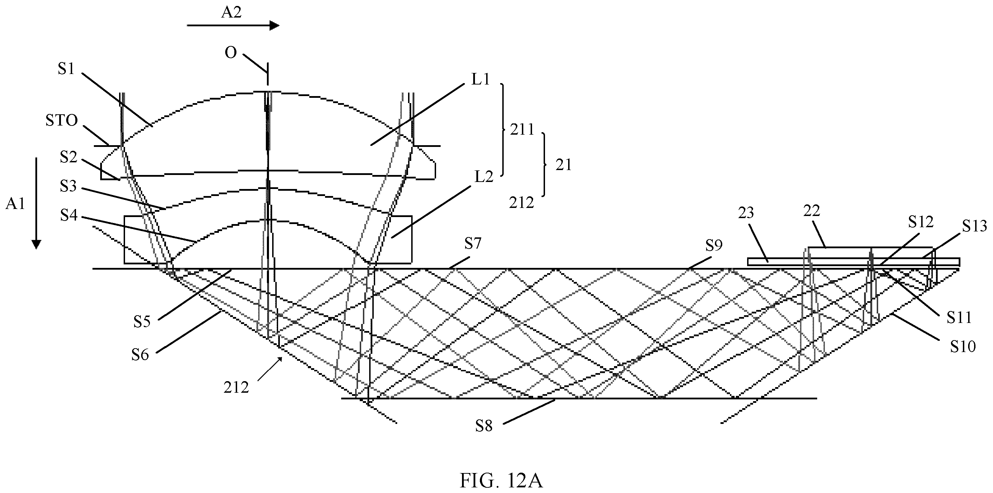

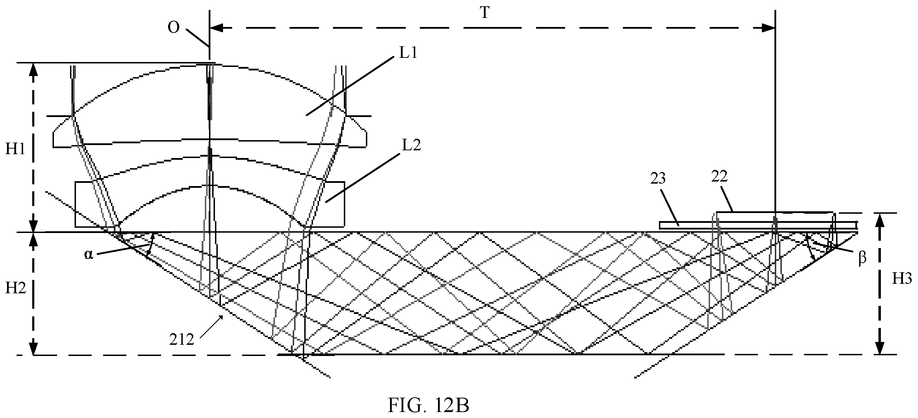

FIG. 12A and FIG. 12B each are a diagram of a structure of the camera assembly 200 according to a sixth embodiment of this application, and are merely for ease of identification. In this embodiment of this application, the camera assembly 200 includes the optical camera lens 21, the photosensitive element 22, and the light filter 23. Light passes through the optical camera lens 21 and the light filter 23 in sequence, and reaches the photosensitive element 22 for imaging. The optical camera lens 21 includes an aperture STO, the lens group 211, and the light folding element 212 that are disposed in sequence along the optical axis O. The lens group 211 and the photosensitive element 22 are located on a same side of the light folding element 212. The lens group 211 may have a positive focal power. The lens group 211 includes a first lens L1 and a second lens L2. The second lens L2 is located between the first lens L1 and the light folding element 212. The aperture STO may be located on an object-side surface of the first lens L1. In another implementation, the aperture STO may alternatively be located at another position. This is not limited in this application. In this embodiment, a 1st lens located on the object-side surface in the lens group 211 is the first lens L1.

In this embodiment, the first lens L1 may have a positive focal power, and the first lens L1 includes an object-side surface S1 and an image-side surface S2. The second lens L2 may have a negative focal power, and the second lens L2 includes an object-side surface S3 and an image-side surface S4.

In this embodiment of this application, the light folding element 212 includes an incident surface S5, a first reflective surface S6, a second reflective surface S7, a third reflective surface S8, a fourth reflective surface S9, a fifth reflective surface S10, and the emergent surface S11. The incident surface S5, the second reflective surface S7, the fourth reflective surface S9, and the emergent surface S11 may be coplanar, and the incident surface S5, the second reflective surface S7, the fourth reflective surface S9, and the emergent surface S11 may be located on a same side of the light folding element 212. Any two surfaces, any three surfaces, or all four surfaces of the incident surface S5, the second reflective surface S7, the fourth reflective surface S9, and the emergent surface S11 may be coplanar. In other words, two or more of the incident surface S5, the second reflective surface S7, the fourth reflective surface S9, and the emergent surface S11 may be coplanar. A coplanar design can reduce difficulty in manufacturing the light folding element 212. Any two adjacent surfaces of the incident surface S5, the second reflective surface S7, the fourth reflective surface S9, and the emergent surface S11 may at least overlap. For example, when the incident surface S5 and the second reflective surface S7 may be coplanar, and the incident surface S5 and the second reflective surface S7 overlap, light can be transmitted into the light folding element 212 from an overlapping region of the incident surface S5 and the second reflective surface S7, and the light can also be reflected in the overlapping region of the incident surface S5 and the second reflective surface S7. In another implementation, the incident surface S5, the second reflective surface S7, the fourth reflective surface S9, and the emergent surface S11 may not be coplanar, and two adjacent surfaces of the incident surface S5, the second reflective surface S7, the fourth reflective surface S9, and the emergent surface S11 may not overlap. In this embodiment, a bottom surface of the light folding element 212 is the third reflective surface S8. The bottom surface of the light folding element 212 is parallel to the incident surface S5.

Before light emitted by the lens group 211 reaches the photosensitive element 22, the light may be reflected and folded five times in the light folding element 22. Light from the lens group 211 may pass through the incident surface S5 of the light folding element 212 and enter the light folding element 212. Reflection of the light at the plurality of reflective surfaces of the light folding element 212 includes: reflection, at the first reflective surface S6, of at least a part of the light passing through the incident surface S5, where the light is reflected for the first time; reflection, at the second reflective surface S7, of at least a part of the light reflected by the first reflective surface S6, where the light is reflected for the second time; reflection, at the third reflective surface S8, of at least a part of the light reflected by the second reflective surface S7, where the light is reflected for the third time; reflection, at the fourth reflective surface S9, of at least a part of the light reflected by the third reflective surface S8, where the light is reflected for the fourth time; and reflection, at the fifth reflective surface S10, of at least a part of the light reflected by the fourth reflective surface S9, where the light is reflected for the fifth time, so that at least the part of light passes through the emergent surface S11 and is emitted from the light folding element 212 to the photosensitive element 22.

In this embodiment of this application, the light folding element 212 may be a prism, for example, may be an isosceles trapezoidal prism. The incident surface S5, the second reflective surface S7, the fourth reflective surface S9, and the emergent surface S11 are all parallel to the third reflective surface S8. In another implementation, the light folding element may be a reflector or another type of light folding element.

In some embodiments, the light folding element 212 may include a groove (not shown in FIG. 12A), the groove may be located on the third reflective surface S8, and the groove may be coated with a light shielding material. This helps reduce stray light and improve imaging quality of the optical camera lens 21.

In addition, the light filter 23 is disposed behind the light folding element 212, and the light filter 23 includes an object-side surface S12 and an image-side surface S13. An imaging surface S14 (not shown in FIG. 12A and FIG. 12B) is a carrier surface on which an image is formed after light passes through the lens group 211 and the light folding element 212 in the optical camera lens 21 in sequence. The photosensitive element 22 is located on the imaging surface S14.

In this embodiment, the first lens L1 may be made of a glass material, and the second lens L2 may be made of a plastic material. In another embodiment, the lens group 211 may be made of a glass material or a plastic material, or may be made of both a glass material and a plastic material. This is not limited in this application.

In this embodiment of this application, the lens group 211 may be moved in the first direction A1 to implement focusing, or the light folding element 212 may be moved in the first direction A1 to implement focusing, so as to implement good imaging effect of the optical camera lens 21. The lens group 211 may be moved in the second direction A2 to implement image stabilization, or the photosensitive element 22 may be moved in the second direction A2 to implement image stabilization. This improves imaging effect.

Table 6a shows a curvature radius, a thickness, a refractive index, and an Abbe number of each lens and each light filter in the optical camera lens 21 in a sixth embodiment. The Abbe number is a dispersion coefficient.

Table 6a

| Surface number | Descriptions | Surface type | Curvature radius | Thickness | Refractive index | Abbe number |
|---|---|---|---|---|---|---|
| OBJ | Object surface | Plane | Infinity | Infinity | | |
| STO | Aperture | Plane | Infinity | -1.654225546 | | |
| S1 | First lens | Spherical surface | 8.6427 | 2.4242 | 1.81 | 40.99 |
| S2 | | Spherical surface | 56.3374 | 0.5417 | | |
| S3 | Second lens | Aspherical surface | 7.9950 | 0.9648 | 1.67 | 19.40 |
| S4 | | Aspherical surface | 4.3552 | 1.4693 | | |

(continued)

| Surface number | Descriptions | Surface type | Curvature radius | Thickness | Refractive index | Abbe number |
|---|---|---|---|---|---|---|
| S5 | | Spherical surface | Infinity | 2.2000 | 1.46 | 90.27 |
| S6 | | First reflective surface | Infinity | -4.4000 | 1.46 | 90.27 |
| S7 | | Second reflective surface | Infinity | 8.0000 | 1.46 | 90.27 |
| S8 | Light folding element | Third reflective surface | Infinity | -8.0000 | 1.46 | 90.27 |
| S9 | | Fourth reflective surface | Infinity | 3.6000 | 1.46 | 90.27 |
| S10 | | Fifth reflective surface | Infinity | -1.8000 | 1.46 | 90.27 |
| S11 | | Spherical surface | Infinity | -0.1000 | | |
| S12 | Light filter | Spherical surface | Infinity | -0.2100 | 1.52 | 64.20 |
| S13 | | Spherical surface | Infinity | -0.2900 | | |
| S14 | Imaging surface | Plane | | | | |

Table 6b shows an aspheric coefficient of each lens of the optical camera lens 21 in a sixth embodiment.

Table 6b

| Surface number | K | A4 | A6 | A8 | A10 |
|---|---|---|---|---|---|
| S3 | | -1.6236E-03 | -1.6713E-05 | 1.0406E-05 | -1.0460E-06 |
| S4 | | -2.3491E-03 | -7.0172E-05 | 2.0331E-05 | -2.4139E-06 |
| Surface number | A12 | A14 | A16 | A18 | A20 |
| S3 | 9.2539E-09 | 6.7999E-09 | -5.9858E-10 | 2.1326E-11 | -2.8634E-13 |
| S4 | -2.9365E-08 | 3.1011E-08 | -2.9685E-09 | 1.1838E-10 | -1.7781E-12 |

Herein, K is a quadratic surface constant, and symbols such as A4, A6, A8, A10, A12, A14, A16, A18, and A20 indicate aspheric coefficients.

In this embodiment, both the object-side surface and the image-side surface of the second lens L2 are aspherical surfaces, and may be limited by using but not limited to the following aspherical surface formula:

$$z = \frac{cr^2}{1 + \sqrt{1 - (1+k)c^2 r^2}} + \sum_{i=2}^{N} \alpha_i r^{2i}$$

Herein, z is a relative distance between a point that is on the aspherical surface and whose distance from an optical axis is r and a tangent plane at an intersection point on the optical axis of the aspherical surface; r is a vertical distance between a point on an aspheric curve and the optical axis; c is curvature; k is a conicity coefficient; and $\alpha_i$ is an $i^{th}$-order aspheric coefficient.

Table 6c shows design parameters in a sixth embodiment of this application. In Table 6c, a diagonal of a semi-sensor is half of a diagonal size of the photosensitive element 22, and a total system height is a sum of H1 and H2. $\alpha$ is an included angle between the first reflective surface S6 and the incident surface S5 of the light folding element 212, and $\beta$ is an included angle between the fifth reflective surface S10 and the emergent surface S11 of the light folding element 212.

Table 6c

| | |
|---|---|
| EFL/mm | 27.49 |
| Fno | 2.74 |
| Diagonal of a semi-sensor/mm | 3.60 |
| Total system height/mm | 9.40 |

(continued)

| | |
|---|---|
| H1/mm | 5.40 |
| H2/mm | 4.00 |
| H3/mm | 4.60 |
| T/mm | 20.70 |
| TTL/mm | 34.00 |
| TTL/EFL | 1.24 |
| H1/(H1+H2) | 0.57 |
| $\alpha/°$ | 30 |
| $\beta/°$ | 30 |
| Focus group | Lens group/Light folding element |

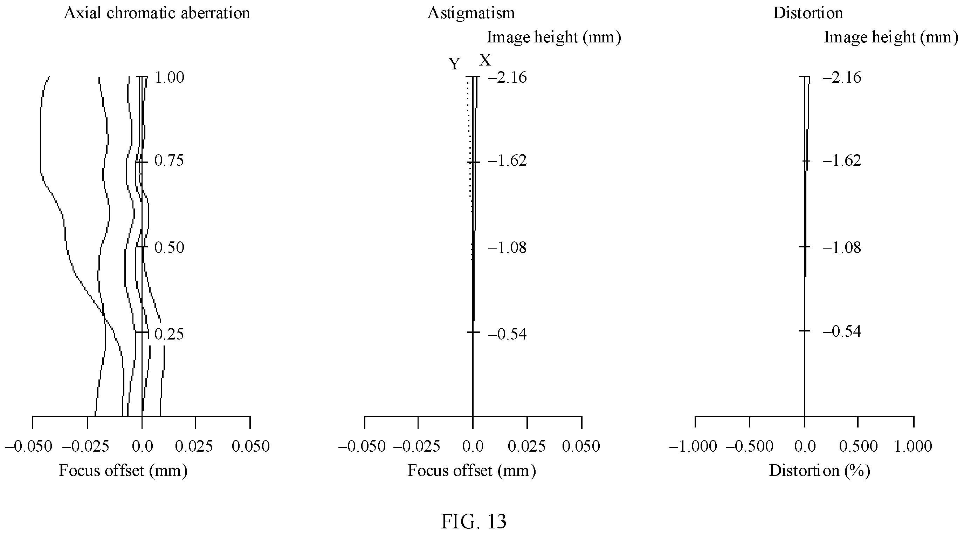

FIG. 13 shows an axial chromatic aberration curve, an astigmatism field curve, and a distortion curve of the optical camera lens according to a sixth embodiment. The axial chromatic aberration curve represents that a convergence point deviates after light of different wavelengths passes through the lenses of the optical system, and reference wavelengths of the axial chromatic aberration curve are 650.0000 nm, 610.0000 nm, 587.5618 nm, 555.0000 nm, and 470.0000 nm. A physical meaning of the axial chromatic aberration curve is a deviation relative to an ideal image point after light of a corresponding wavelength emitted in a 0-degree field of view passes through the optical camera lens. A horizontal coordinate of the axial chromatic aberration curve is a deviation value in an optical axis direction, and a vertical coordinate of the axial chromatic aberration curve is a normalized coordinate at a pupil. Values in FIG. 13 are all small, and axial aberrations (a spherical aberration, a chromatic aberration, and the like) of the optical camera lens 21 is well corrected. The astigmatism field curve indicates meridional image plane bending and sagittal image plane bending, and indicates a deviation between a convergence point of fine beams in different fields of view and an ideal imaging surface, where a solid line X is a beam in a sagittal direction, and a dashed line Y is a beam in a meridional direction. A horizontal coordinate of the astigmatism field curve is a deviation value in the optical axis direction, and a vertical coordinate of the astigmatism field curve is a corresponding field of view. A reference wavelength of the astigmatism field curve may be 587.5618 nm. When a specific value of a field of view is excessively large, image quality of the field of view is poor or an advanced aberration exists. As shown in FIG. 13, field curvatures in the two directions are small, and the system has a good depth of focus. The distortion curve indicates a relative deviation between a convergence point (an actual image height) of beams in different fields of view and an ideal image height. A reference wavelength of the distortion curve may be 587.5618 nm, and is within 1% shown in FIG. 13, so that it can be ensured that there is no obvious distortion in a picture. It can be learned from FIG. 13 that the camera assembly 200 provided in a sixth embodiment can implement good imaging quality.

The camera assembly 200 provided in this embodiment has a total system height of 9.40 mm, a total track length TTL of 34.00 mm, an effective focal length EFL of 27.49 mm, a ratio of the total track length TTL to the focal length EFL of 1.24, and an F-number of 2.74. Light can be reflected and folded five times in the light folding element 212, so that the optical camera lens group has features of telephoto, a wide aperture, and miniaturization, and the camera assembly 200 can have good imaging quality.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application. In a case that no conflict occurs, embodiments of this application and the features in the embodiments may be mutually combined.

## Claims

1. An optical camera lens (21), comprising a lens group (211) and a light folding element (212), wherein

    the lens group (211) comprises at least one lens with a positive focal power;
    the light folding element (212) comprises an incident surface (S5, S7) and an emergent surface (S9, S11), the incident surface (S5, S7) and the emergent surface (S9, S11) are located on a same side of the light folding element (212), the incident surface (S5, S7) is disposed facing the lens group (211), after passing through the lens group (211), the light enters the light folding element (212) through the incident surface (S5, S7), and the light is reflected a plurality of times in the light folding element (212), and is emitted from the light folding element (212) through the emergent surface (S9, S11); and the optical camera lens (21) satisfies the following relational expressions:

$$5 \text{ mm} < T < 25 \text{ mm};$$

$$5 \text{ mm} \leq EPD \leq 15 \text{ mm},$$

wherein
T is a vertical distance from a center of an imaging surface to an optical axis of the lens group (211), and EPD is an entrance pupil diameter of the optical camera lens (21).

2.  The optical camera lens (21) according to claim 1, wherein the optical camera lens (21) satisfies the following relational expression:

$$0.7 < TTL/EFL < 5,$$

wherein
TTL is a total track length of the optical camera lens (21), and EFL is an effective focal length of the optical camera lens (21).

3.  The optical camera lens (21) according to claim 1 or 2, wherein the optical camera lens (21) satisfies the following relational expression:

$$0.15 < H1/(H1+H2) < 0.95,$$

wherein
H1 is a vertical distance from a vertex of a 1st lens located on an object-side surface in the lens group (211) to the incident surface (S5, S7) of the light folding element (212), and H2 is a vertical distance from the incident surface (S5, S7) of the light folding element (212) to a bottom surface.

4.  The optical camera lens (21) according to claim 1 or 2, wherein the optical camera lens (21) satisfies the following relational expression:

$$6 \text{ mm} < H1+H2 < 15 \text{ mm},$$

wherein
H1 is a vertical distance from a vertex of a 1st lens located on an object-side surface in the lens group (211) to the incident surface (S5, S7) of the light folding element (212), and H2 is a vertical distance from the incident surface (S5, S7) of the light folding element (212) to a bottom surface.

5.  The optical camera lens (21) according to claim 1 or 2, wherein the optical camera lens (21) satisfies the following relational expression:

$$3.5 \text{ mm} < H1 < 6.5 \text{ mm},$$

wherein
H1 is a vertical distance from a vertex of a 1st lens located on an object-side surface in the lens group (211) to the incident surface (S5, S7) of the light folding element (212).

6.  The optical camera lens (21) according to claim 1, 2, or 5, wherein the optical camera lens (21) satisfies the following relational expression:

$$2.5 \text{ mm} < H2 < 5 \text{ mm,}$$

wherein
H2 is a vertical distance from the incident surface (S5, S7) of the light folding element (212) to a bottom surface.

7. The optical camera lens (21) according to any one of claims 1 to 6, wherein the optical camera lens (21) satisfies the following relational expression:

$$3 \text{ mm} < H3 < 12 \text{ mm,}$$

wherein
H3 is a distance between the imaging surface of the optical camera lens (21) and a surface that is of the light folding element (212) that is farthest away from the lens group (211).

8. The optical camera lens (21) according to any one of claims 1 to 7, wherein an equivalent focal length of the optical camera lens (21) is greater than or equal to 65 mm and less than or equal to 300 mm.

9. The optical camera lens (21) according to any one of claims 1 to 8, wherein the optical camera lens (21) satisfies the following relational expression:

$$1.4 < Fno < 10,$$

wherein
Fno is an F-number of the optical camera lens (21).

10. The optical camera lens (21) according to any one of claims 1 to 9, wherein the light is reflected N times in the light folding element (212), wherein N is an odd number greater than or equal to 3.

11. The optical camera lens (21) according to any one of claims 1 to 10, wherein the light folding element (212) comprises a trapezoidal columnar prism, the light folding element (212) comprises a first reflective surface (S6), a second reflective surface (S7), and a third reflective surface (S8), the second reflective surface (S7) and the incident surface (S5) are located on a same side of the light folding element (212), an included angle between the first reflective surface (S6) and the incident surface (S5) is an acute angle, an included angle between the third reflective surface (S8) and the emergent surface (S9) is an acute angle, and reflection of the light at the plurality of reflective surfaces of the light folding element (212) comprises:

reflection, at the first reflective surface (S6), of at least a part of the light passing through the incident surface (S5);
reflection, at the second reflective surface (S7), of at least a part of the light reflected by the first reflective surface (S6); and
reflection, at the third reflective surface (S8), of at least a part of the light reflected by the second reflective surface (S7), so that at least the part of light passes through the emergent surface (S9) and is emitted from the light folding element (212).

12. The optical camera lens (21) according to claim 11, wherein any two of the incident surface (S5), the second reflective surface (S7), or the emergent surface (S9) are located on a same plane.

13. The optical camera lens (21) according to any one of claims 1 to 10, wherein the light folding element (212) comprises a trapezoidal columnar prism, the light folding element (212) comprises a first reflective surface (S6), a second reflective surface (S7), a third reflective surface (S8), a fourth reflective surface (S9), and a fifth reflective surface (S10), the second reflective surface (S7), the fourth reflective surface (S9), and the incident surface (S5) are located on a same side of the light folding element (212), an included angle between the first reflective surface (S6) and the incident surface (S5) is an acute angle, an included angle between the fifth reflective surface (S10) and the emergent surface (S11) is an acute angle, and reflection of the light at the plurality of reflective surfaces of the light folding element (212) comprises:

reflection, at the first reflective surface (S6), of at least a part of the light passing through the incident surface (S5);

reflection, at the second reflective surface (S7), of at least a part of the light reflected by the first reflective surface (S6);

reflection, at the third reflective surface (S8), of at least a part of the light reflected by the second reflective surface (S7);

reflection, at the fourth reflective surface (S9), of at least a part of the light reflected by the third reflective surface (S8); and

reflection, at the fifth reflective surface (S10), of at least a part of the light reflected by the fourth reflective surface (S9), so that at least the part of light passes through the emergent surface (S11) and is emitted from the light folding element (212).

14. The optical camera lens (21) according to claim 13, wherein any two of the incident surface (S5), the second reflective surface (S7), the fourth reflective surface (S9), or the emergent surface (S11) are located on a same plane.

15. The optical camera lens (21) according to any one of claims 11 to 14, wherein the optical camera lens (21) satisfies the following relational expression:

$10°<\alpha<45°$ or $10°<\beta<45°$, wherein
$\alpha$ is the included angle between the first reflective surface (S6) and the incident surface (S5), and $\beta$ is an included angle between the emergent surface (S9, S11) and a last reflective surface that is of the light folding element (212) and through which the light passes.

16. The optical camera lens (21) according to claim 15, wherein the optical camera lens (21) satisfies the following relational expression: $\alpha=\beta$.

17. The optical camera lens (21) according to any one of claims 1 to 16, wherein the lens group (211) moves for focusing in a direction of the optical axis of the lens group (211), or the light folding element (212) moves for focusing in a direction of the optical axis of the lens group (211).

18. The optical camera lens (21) according to any one of claims 1 to 16, wherein the lens group (211) moves in a direction perpendicular to the optical axis of the lens group (211) to implement image stabilization.

19. A camera assembly, comprising a photosensitive element (22) and the optical camera lens (21) according to any one of claims 1 to 18, wherein the photosensitive element (22) is located on an image side of the optical camera lens (21).

20. The camera assembly (200) according to claim 19, wherein the photosensitive element (22) moves for focusing in the direction of the optical axis of the lens group (211), or the photosensitive element (22) moves in the direction perpendicular to the optical axis of the lens group (211) to implement image stabilization.

21. An electronic device (1000), comprising an image processor (300) and the camera assembly (200) according to claim 19 or 20, wherein the image processor (300) is communicatively connected to the camera assembly (200), and the image processor (300) is configured to obtain image data from the camera assembly (200) and process the image data.

FIG. 1

FIG. 2A

EP 4 560 374 A1

FIG. 2B

Axial chromatic aberration

Astigmatism

Distortion

Image height (mm)

Image height (mm)

Y    X

1.00

−2.16

−2.16

0.75

−1.62

−1.62

0.50

−1.08

−1.08

0.25

−0.54

−0.54

−0.08  −0.04  0.00  0.04  0.08

−0.050  −0.025  0.0  0.025  0.050

−1.00  −0.50  0.00  0.50  1.00

Focus offset (mm)

Focus offset (mm)

Distortion (%)

FIG. 3

EP 4 560 374 A1

37

FIG. 4A

EP 4 560 374 A1

FIG. 4B

Axial chromatic aberration

Astigmatism

Image height (mm)

Distortion

Image height (mm)

Y    X

—2.16

1.00

—2.16

0.75

—1.62

—1.62

0.50

—1.08

—1.08

0.25

—0.54

—0.54

-0.08  -0.04   0.0   0.04   0.08

-0.050  -0.025   0.0   0.025  0.050

-1.00  -0.50   0.00   0.50   1.00

Focus offset (mm)

Focus offset (mm)

Distortion (%)

FIG. 5

EP 4 560 374 A1

FIG. 6A

EP 4 560 374 A1

FIG. 6B

Axial chromatic aberration

Astigmatism

Image height (mm)

Distortion

Image height (mm)

FIG. 7

EP 4 560 374 A1

FIG. 8A

FIG. 8B

EP 4 560 374 A1

Axial chromatic aberration

Astigmatism

Distortion

Image height (mm)

Image height (mm)

FIG. 9

EP 4 560 374 A1

FIG. 10A

EP 4 560 374 A1

EP 4 560 374 A1

FIG. 10B

Axial chromatic aberration

Astigmatism

Image height (mm)

Distortion

Image height (mm)

Y X

1.00

−2.16

−2.16

0.75

−1.62

−1.62

0.50

−1.08

−1.08

0.25

−0.54

−0.54

0.08 −0.04 0.0 0.04 0.08

−0.050 −0.025 0.0 0.025 0.050

−1.000 −0.500 0.00 0.500 1.000

Focus offset (mm)

Focus offset (mm)

Distortion (%)

FIG. 11

EP 4 560 374 A1

FIG. 12A

FIG. 12B

Axial chromatic aberration

Astigmatism

Image height (mm)

Distortion

Image height (mm)

Y  X

—2.16

—2.16

1.00

0.75

—1.62

—1.62

0.50

—1.08

—1.08

0.25

—0.54

—0.54

−0.050 −0.025  0.0  0.025  0.050

Focus offset (mm)

−0.050 −0.025  0.0  0.025  0.050

Focus offset (mm)

−1.000 −0.500  0.0  0.500  1.000

Distortion (%)

FIG. 13

EP 4 560 374 A1

## INTERNATIONAL SEARCH REPORT

| International application No. |
|---|
| **PCT/CN2023/127424** |

**A. CLASSIFICATION OF SUBJECT MATTER**

G02B13/00(2006.01)i

According to International Patent Classification (IPC) or to both national classification and IPC

**B. FIELDS SEARCHED**

Minimum documentation searched (classification system followed by classification symbols)

IPC:G02B13/-

Documentation searched other than minimum documentation to the extent that such documents are included in the fields searched

Electronic data base consulted during the international search (name of data base and, where practicable, search terms used)

CNTXT, CNABS: 折, 叠, 反射, 方向, 走向, 180°, 180度, 长焦, 对焦, 变焦; VEN, USTXT, EPTXT, WOTXT: fold, pucker, reflect, direction, orientation, 180, degree, telephoto, focus, zoom

**C. DOCUMENTS CONSIDERED TO BE RELEVANT**

| Category* | Citation of document, with indication, where appropriate, of the relevant passages | Relevant to claim No. |
|---|---|---|
| X | CN 115327743 A (KUNSHAN QTECH MICROELECTRONICS CO., LTD.) 11 November 2022 (2022-11-11) <br> description, paragraphs 46-55 and 66-127, and figures 1 and 8-25 | 1-21 |
| X | CN 112673295 A (HUAWEI TECHNOLOGIES CO., LTD.) 16 April 2021 (2021-04-16) <br> description, paragraphs 38-58, and figures 3-7 | 1-11, 15-21 |
| X | CN 115327748 A (KUNSHAN QTECH MICROELECTRONICS CO., LTD.) 11 November 2022 (2022-11-11) <br> description, paragraphs 33-84, and figures 1-11 | 1-9, 17-21 |
| X | CN 115327747 A (KUNSHAN QTECH MICROELECTRONICS CO., LTD.) 11 November 2022 (2022-11-11) <br> description, paragraphs 39-122, and figures 1-20 | 1-9, 17-21 |
| X | CN 111856711 A (NANCHANG O-FILM OPTICAL-ELECTRONIC TECH CO., LTD.) 30 October 2020 (2020-10-30) <br> description, paragraphs 28-42, and figures 1-8 | 1-9, 17-21 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 January 2024** | **10 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/127424**

### C.    DOCUMENTS CONSIDERED TO BE RELEVANT

| Category* | Citation of document, with indication, where appropriate, of the relevant passages | Relevant to claim No. |
|---|---|---|
| A | JP 2003270548 A (OLYMPUS OPTICAL CORPORATION) 25 September 2003 (2003-09-25)<br>    entire document | 1-21 |

Form PCT/ISA/210 (second sheet) (July 2022)

**INTERNATIONAL SEARCH REPORT**
Information on patent family members

International application No.

**PCT/CN2023/127424**

| Patent document cited in search report | | | Publication date (day/month/year) | Patent family member(s) | | | Publication date (day/month/year) |
|---|---|---|---|---|---|---|---|
| CN | 115327743 | A | 11 November 2022 | CN | 218272884 | U | 10 January 2023 |
| | | | | CN | 219370036 | U | 18 July 2023 |
| | | | | CN | 219370111 | U | 18 July 2023 |
| CN | 112673295 | A | 16 April 2021 | WO | 2020052771 | A1 | 19 March 2020 |
| | | | | EP | 3830624 | A1 | 09 June 2021 |
| CN | 115327748 | A | 11 November 2022 | None | | | |
| CN | 115327747 | A | 11 November 2022 | None | | | |
| CN | 111856711 | A | 30 October 2020 | CN | 212410946 | U | 26 January 2021 |
| JP | 2003270548 | A | 25 September 2003 | None | | | |

Form PCT/ISA/210 (patent family annex) (July 2022)

**REFERENCES CITED IN THE DESCRIPTION**

**Patent documents cited in the description**

- CN 202211448566